# EUROPÄISCHE PATENTSCHRIFT

(11) **EP 3 973 008 B1**
(45) Veröffentlichungstag und Bekanntmachung des Hinweises auf die Patenterteilung: **05.06.2024**
(21) Anmeldenummer: 20730974.1
(22) Anmeldetag: 23.04.2020
(51) Int. Cl.: C08G 59/10, C08G 59/18, C08G 59/40, C08G 59/50, C08L 63/00, C09D 163/00

(54) **WÄSSRIGE HARZDISPERSION UND WÄSSRIGE BESCHICHTUNGSZUSAMMENSETZUNG ENTHALTEND DIE HARZDISPERSION**
AQUEOUS RESIN DISPERSION AND AQUEOUS COATING COMPOSITION CONTAINING THE RESIN DISPERSION
DISPERSION AQUEUSE DE RÉSINE ET COMPOSITION AQUEUSE DE REVÊTEMENT CONTENANT LADITE DISPERSION DE RÉSINE

(30) Priorität: 23.05.2019 EP 19176217
(43) Veröffentlichungstag der Anmeldung: 30.03.2022
(73) Patentinhaber: BASF Coatings GmbH, 48165 Münster (DE)
(72) Erfinder: KUNZE, Andreas Arrian, 48165 Muenster (DE); SCHOEPS, Sibylle, 48165 Muenster (DE); HAMSEN, Rene, 48165 Muenster (DE); BENNING, Dirk, 48165 Muenster (DE); DIEKMANN, Hildegund, 48317 Drensteinfurt (DE); GEUTING, Martin, 48165 Muenster (DE); PRZYBILLA, Silke, 48165 Muenster (DE); RESSEL, Joerg, 48165 Muenster (DE); RUMP, Ignacia, 48167 Muenster (DE); SCHEMSCHAT, Dagmar, 48308 Senden (DE); THEIL, Hubert, Shanghai, 200137 (CN); KONDRAT, Anna, 48165 Muenster (DE); ROHKAMP, Beate, 48165 Muenster (DE); TIGGEMANN, Monika, 48317 Drensteinfurt (DE); WINKLER, Thorsten, 48165 Muenster (DE); NIENHAUS, Egbert, 48165 Muenster (DE); GOSHEGER, Sven, 48317 Drensteinfurt (DE)
(74) Vertreter: BASF IP Association
(86) Internationale Anmeldenummer: PCT/EP2020/061370
(87) Internationale Veröffentlichungsnummer: WO 2020/233939

(56) Entgegenhaltungen:
- EP-A1- 0 735 070
- EP-A1- 0 821 021
- EP-A1- 1 316 574
- EP-A2- 0 387 418
- EP-A2- 0 816 453
- EP-A2- 1 266 920
- WO-A1-97/49749
- DE-A1- 4 303 562
- DE-A1- 19 843 835

## Beschreibung

Die vorliegende Erfindung betrifft eine wässrige Harzdispersion, das heißt eine wässrige Harzdispersion (wD) enthaltend eine Harzkomponente (H), wobei die Harzkomponente di- und/oder polyfunktionelle monomere organische Amine sowie polyfunktionelle polymere organische Amine enthält. Die vorliegende Erfindung betrifft auch wässrige Beschichtungszusammensetzungen enthaltend die Harzdispersion (wD). Die Beschichtungszusammensetzung enthält eine Kombination der Harzdispersion und eines Epoxidharzes und ist hervorragend als wässriger Schleiffüller beziehungsweise Grundierfüller geeignet. Demzufolge können durch Applikation auf ein Substrat und anschließende Härtung der Beschichtungszusammensetzung eine Füllerschicht erhalten werden, die sich ausgezeichnet schleifen lässt und damit insbesondere im Reparaturbereich einsetzbar ist.

### Stand der Technik

Wässrige Füller und Grundierfüller, die auf Basis von Epoxid-Amin-Kombinationen härtbar sind und auf diese Weise korrosionsstabile Füllerschichten beziehungsweise Grundierfüllerschichten ausbilden können, sind grundsätzlich bekannt. Ihr Eigenschaftsprofil ist dabei durchaus komplex und zeichnet sich insbesondere durch die schon genannte Korrosionsstabilität und eine gute Haftung auf verschiedenen Substraten wie Stahl, verzinktem Stahl, Aluminium, Elektrotauchlackierungen und Altlackierungen aus.

Zu beachten ist allerdings, dass insbesondere Füllerschichten, die im Bereich der Automobilreparaturlackierung aufgebaut werden, bereits nach einer Härtung bei moderater Temperatur und innerhalb von in Lackierwerkstätten üblichen Prozesszeiten angemessen schleifbar sein sollen. Diese Schleifbarkeit ist im Prozessablauf der Lackierung von hoher Wichtigkeit, um eine homogene Oberfläche für die dann folgenden Schichten wie Basislack und Klarlack zu schaffen und letztlich ein ästhetisch hochwertiges Erscheinungsbild der lackierten Oberfläche zu ermöglichen. Allerdings weisen die aus dem Stand der Technik bekannten Systeme gerade hinsichtlich ihrer Schleifbarkeit noch Schwächen auf.

WO 97/49749 A1 offenbart Überzugsmittel auf Basis wässriger Epoxidsysteme, welche bestimmte Epoxid-Aminourethan-Addukte als Härter enthalten. Diese werden durch Umsetzung von sehr speziellen Aminourethan-Verbindungen mit Epoxidverbindungen erhalten. Die Epoxidverbindungen werden durch Umsetzung von Polyalkylenpolyethern mit ein oder mehreren Aminogruppen erhalten. Eingesetzt werden diese Addukte in wässrigen Zweikomponentenlacken, insbesondere Automobillacken. Die Lacke beziehungsweise daraus hergestellte Lackschichten besitzen eine gute Schleifbarkeit. Angegeben wird, dass die in EP 0 387 418 A2 beschriebenen Lacke hinsichtlich ihrer Schleifbarkeit Nachteile aufweisen.

EP 0 387 418 A2 offenbart ein Härtungsmittel für Epoxidverbindungen und dessen Einsatz zur Herstellung von Beschichtungen und Überzügen. Die Herstellung des Härtungsmittels erfolgt durch Umsetzung von Polyalkylenpolyetheraminen mit einem stöchiometrischen Überschuss an Di- und/oder Polyepoxidverbindungen und anschließende Umsetzung des vorgenannten Addukts mit einem stöchiometrischen Überschuss an Aminen. Die mit diesen Härtungsmitteln hergestellten Beschichtungsmittel weisen eine gute Lagerstabilität sowie gute Härtungseigenschaften auf. Die Reparaturlackierung wird genauso wenig wie die Schleifbarkeit von Beschichtungen oder die Verwendung der Härtungsmittel in Füllern genannt.

EP 0 610 787 A2 beschreibt ein Härtungsmittel für wässrige Epoxidharz-Dispersionen, erhalten durch Umsetzung eines Addukts (A) aus Polyepoxid und Polyalkylenpolyetherpolyol mit einem Umsetzungsprodukt aus einem Amin und einem Epoxid oder einem Amin und anschließende Umsetzung mit einem Epoxid, wobei das Amin jeweils im stöchiometrischen Überschuss eingesetzt wird. Als Aufgabe wird beispielsweise der Erhalt von guter Haftung und Härte in Beschichtungszusammensetzungen, unter anderem Füllern, genannt.

EP 0 816 453 A2 beschreibt ein wasserbasiertes Beschichtungsmittel enthaltend ein oder mehrere Härter, ein oder mehrere Epoxidharze, die mit Wasser verdünnbar sind, ein oder mehrere Pigmente und/oder Füllstoffe sowie Wasser.

EP 1 266 920 A2 beschreibt einen wasserverdünnbaren Aminhärter für wässrige 2-Komponenten Epoxidharzsysteme, welche eine Kombination eines Amin/Polyepoxidaddukts mit einem Emulsifizierungsmittel, welches ebenfalls unter Einsatz von Polyepoxiden und Aminen hergestellte wurde, enthält.

DE 198 43 835 A1 beschreibt ein wässriges Beschichtungsmittel enthaltend eine Aminkomponente A) aus speziellen Aminourethanen A1), die mit hydrophilen wasserverdünnbaren Epoxidverbindungen A2) umgesetzt sein können, und einer speziellen Epoxidkomponente B).

EP 1 316 574 A1 beschreibt wässrige Härter für Epoxidharzdispersionen enthaltend Mischungen, Additionsprodukte und/oder Salze von teilweise veresterten Phosphorsäuren A1 oder teilweise veresterten organischen Phosphonsäuren A2 mit organischen Aminen B ausgewählt aus Epoxid-Amin-Addukten B1, Mannich-Basen B2, Polyaminoamiden B3 und Kondensationsprodukten B4 von Di- oder Polyaminen B42 mit Di- oder Polyhydroxyaromaten B41.

EP 0 821 021 A1 beschreibt wasserdispergierbare Härter für Epoxidharze, die in Mischung mit Epoxidharzen das Ende der Verarbeitungszeit durch einen deutlichen Viskositätsanstieg zeigen.

EP 0 735 070 A1 beschreibt Härtungsmittel für elastische Epoxidharz-Systeme.

### Aufgabe und technische Lösung

Aufgabe der vorliegenden Erfindung war es demzufolge, die Nachteile des Stands der Technik zu beseitigen und eine wässrige Beschichtungszusammensetzung bereitzustellen, die nach Applikation und Härtung insbesondere im Rahmen einer Automobilreparaturlackierung gute Haftungs- und Korrosionsschutzeigenschaften aufweist, trotzdem aber nach bereits vergleichsweise kurzer Härtung bei niedrigen Temperaturen sehr gut schleifbar ist. Die Zusammensetzung sollte somit besonders gut als Füller und Grundierfüller beziehungsweise zur Herstellung der Füllerschicht in einer Mehrschichtlackierung geeignet sein.

Gefunden wurde, dass die genannten Aufgaben gelöst werden konnten durch eine neue wässrige Harzdispersion (wD) enthaltend eine Harzkomponente (H) enthaltend mindestens ein di- und/oder polyfunktionelles monomeres primäres und/oder sekundäres Amin (M) sowie polyfunktionelle polymere organische Amine mit primären und/oder sekundären Aminogruppen
wobei die Harzkomponente (H) ein NH-Äquivalent von 150 bis 400 g/mol und einen Gewichtsanteil an di- und/oder polyfunktionellen monomeren organischen Aminen (M) von 5 bis 15 Gew.-% aufweist,
wobei ferner die polyfunktionellen polymeren organischen Amine mit primären und sekundären Aminogruppen, in miteinander umgesetzter Form,
   (i) mindestens eine di und/oder multifunktionelle organische Epoxidverbindung, wobei die Epoxidverbindungen im Mittel ein Epoxidäquivalentgewicht von kleiner 400 g/mol aufweisen,
   (ii) mindestens ein monomeres Amin (M), und
   (iii) mindestens eine Verbindung X-R, wobei X eine gegenüber Epoxidgruppen reaktive funktionelle Gruppe ist und R ein organischer Rest enthaltend Polyoxyalkyleneinheiten, der keine weiteren Gruppen X enthält, ist,
   enthalten,
und wobei die Amine (M) zu mindestens 65 mol-% aus Aminen bestehen, die aus Aminogruppen und Kohlenwasserstoffeinheiten bestehen.

Die neue Harzdispersion (wD) wird auch erfindungsgemäße Dispersion genannt. Ein weiterer Gegenstand der vorliegenden Erfindung ist eine wässrige Zweikomponenten (2K)-Beschichtungszusammensetzung enthaltend die erfindungsgemäße Dispersion. Gegenstand der vorliegenden Erfindung ist zudem ein Verfahren zur Herstellung einer Beschichtung unter Einsatz der Beschichtungszusammensetzung. Nicht zuletzt Gegenstand der vorliegenden Erfindung ist ein Verfahren zur Reparatur einer Mehrschichtlackierung, die Fehlstellen aufweist, umfassend die Applikation einer solchen Beschichtungszusammensetzung, die Härtung der Zusammensetzung zur Herstellung einer gehärteten Beschichtungsschicht und das anschließende Schleifen der Beschichtungsschicht. Auch eine wie beschrieben hergestellte Beschichtungsschicht und ein beschichtetes Substrat sind Gegenstand der vorliegenden Erfindung.

### Ausführliche Beschreibung

### Wässrige Harzdispersion (wD)

Die vorliegende Erfindung betrifft zunächst eine wässrige Harzdispersion (wD) enthaltend eine Harzkomponente (H).

Der Begriff "wässrig" im Zusammenhang mit Dispersionen wie Harzdispersionen, Phasen oder auch wässrigen Beschichtungszusammensetzungen ist grundsätzlich bekannt. Gemeint ist eine Dispersion oder Mischung, die als Lösemittel einen signifikanten Anteil Wasser enthält. Selbstverständlich können aber auch wässrigen Systeme organische Lösemittel in zumindest untergeordneten Mengen enthalten, beispielsweise als Co-Lösemittel mit Emulgatorfunktion zur Stabilisierung von bestimmten Bestandteilen wie Harzen, Pigmenten oder Additiven. Bevorzugt ist "wässrig" im Rahmen der vorliegenden Erfindung so zu verstehen, dass das jeweilige System, insbesondere die Dispersion, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 50 bis 99 Gew.-%, insbesondere 60 bis 98 Gew.-%, jeweils bezogen auf die Gesamtmenge der enthaltenen Lösemittel.

Unter Harz oder Harzkomponente ist ebenfalls im Einklang mit der grundsätzlich bekannten Definition ein Produkt zu verstehen, dass organische Bestandteile, nämlich organische Reaktionsprodukte, Oligomere und/oder Polymere sowie gegebenenfalls, wie die Harzkomponente (H), auch Monomere, enthält. Harze weisen dabei eine mehr oder weniger breite Verteilung der Molmassen auf und sind in der Regel als Bindemittel in Beschichtungszusammensetzungen einsetzbar. Sie bilden also mindestens anteilig das nach Aushärtung vorhandene polymere Netzwerk einer Beschichtungsschicht.

Die Harzkomponente (H) enthält erfindungsgemäß mindestens ein di- und/oder polyfunktionelles monomeres primäres und/oder sekundäres Amin (M), das heißt mindestens ein monomeres Amin, das mindestens zwei Aminogruppen ausgewählt aus der Gruppe der primären und sekundären Aminogruppen umfasst. Natürlich ist nicht ausgeschlossen, dass zudem tertiäre Aminogruppen enthalten sind.

Im Rahmen der vorliegenden Erfindung ist es wesentlich, dass die insgesamt zum Einsatz gebrachten und damit in der wässrigen Dispersion (wD) enthaltenen Amine (M) zu mindestens 65 mol-% aus Aminen bestehen, die aus Aminogruppen und Kohlenwasserstoffeinheiten bestehen. Es hat sich gezeigt, dass andererseits ein negativer Einfluss auf die Schleifbarkeit resultiert. Dies bedeutet also, dass insbesondere andere funktionellen Gruppen wie beispielsweise Hydroxy-, Carboxy- oder Nitrilgruppen lediglich in untergeordneten Mengen enthalten sind. Bevorzugt ist, dass die Amine (M) zu mindestens 75 mol-%, nochmals bevorzugt zu mindestens 90 mol-%, aus Aminen bestehen, die aus Aminogruppen und Kohlenwasserstoffeinheiten bestehen. Ganz bevorzugt ist der Anteil dieser Amine bei 100 mol-%.

Der Anteil entsprechender Amine ergibt sich grundsätzlich selbsterklärend aus den Mengen der eingesetzten Amine. Im Falle des Einsatzes von Produkten wie Handelsprodukten ist es aber genauso möglich, durch Analyse der Produkte (in denen Amine auch bereits teilweise oder vollständig kovalent verknüpft sein können) den Anteil entsprechender Amine insoweit zu bestimmen, dass unmittelbar klar ist, dass die o.g. Bedingungen erfüllt sind (Analyse beispielsweise über Gaschromatographie (GC), Massenspektrometrie (MS)).

Beispiele geeigneter Amine (M) sind die dem Fachmann grundsätzlich bekannten monomeren aliphatischen Amine, aromatischen Amine und araliphatischen (gemischt aliphatisch-aromatischen) Amine.

Beispielsweise seien als di- und/oder polyfunktionelle monomere primäre und/oder sekundäre Amine die folgenden genannt: Ethylendiamin, 1,2-Propylendiamin, 1,3-Propylendiamin, 1,4-Butandiamin, 1,8-Octandiamin, 1,3-Diaminopentan, Hexamethylendiamin, 2-Methylpentamethylendiamin, Neopentandiamin, Cyclohexandiamin, 2,2,4-(2,4,4-)Trimethylhexamethylendiamin, Isophorondiamin, Bis-(aminomethyl)cyclohexan, Bis-(4-Aminocyclohexyl)methan, Diethylentriamin, Triethylentetramin, Tetraethylenpentamin, Dipropylentriamin, Bishexamethylendiamin, N,N-Dimethylaminodipropylentriamin, Laurylpropylendiamin, 1,2-, und 1,3-(m)-Xylylendiamin) und 1,4-Bis(Aminomethyl)benzol. Als weitere Amine seien Aminoethylethanolamin oder auch heterocyclische Polyamine, wieAminoethylpiperazin und Bis-(aminopropyl)piperazin, genannt.

Bevorzugt sind difunktionelle primäre und/oder sekundäre Amine (M), nochmals bevorzugt difunktionelle primäre Amine. Ganz besonders bevorzugt sind Isophorondiamin und m-Xylyendiamin, wobei die Harzkomponente nochmals bevorzugt eine Mischung der beiden genannten Diamine enthält. Dies bedeutet also, dass die Amine (M) eine Mischung aus Isophorondiamin und m-Xylyendiamin darstellen.

Der Anteil des mindestens einen di- und/oder polyfunktionellen monomeren primären und/oder sekundären Amins (M), bezogen auf die Harzkomponente (H), beträgt 5 bis 15 Gew.-%., bevorzugt 6 bis 14 Gew.-%, nochmals bevorzugt 7 bis 13 Gew.-% (Messmethode siehe Beispielteil).

Die Harzkomponente (H) enthält ferner polyfunktionelle polymere organische Amine mit primären und/oder sekundären Aminogruppen. In Abgrenzung zu den bereits beschriebenen monomeren Aminen handelt es sich also gerade nicht um niedermolekulare Verbindungen mit einer diskreten und pro Molekül konstanten Anzahl von Aminogruppen pro Molekül, sondern um Addukte beziehungsweise Reaktionsprodukte, die polymeren Charakter haben und deren Anzahl von Aminogruppen pro Molekül sich lediglich über Mittelwerte beschreiben ließen.

Die Struktur der hier beschriebenen Komponenten, nämlich der polyfunktionellen polymeren organischen Amine mit primären und/oder sekundären Aminogruppen, erschließt sich aus den weiter unten beschriebenen Ausgangsverbindungen zur Herstellung der Harzkomponente (H).

Die Harzkomponente (H) hat ein N-H-Äquivalent von 150 bis 400 g/mol, bevorzugt 160 bis 350 g/mol, nochmals bevorzugt 170 bis 250 g/mol (Bestimmungsmethode siehe Beispielteil).

Die wässrige Dispersion (wD) enthaltend die Harzkomponente (H) ist beispielsweise herstellbar durch einen zweistufigen Prozess (A+B), der in der Folge genauer beschrieben wird.

### Stufe A

In einer ersten Stufe (A) der Reaktionsabfolge werden zwei Ausgangskomponenten (la) und (Ib) miteinander umgesetzt, nämlich ein epoxidfunktionelles Harzgemisch (la) und eine Komponente (Ib) enthaltend mindestens ein di- und/oder multifunktionelles monomeres primäres und/oder sekundäres Amin (M). Dabei entsteht ein aminofunktionelles Harzgemisch (I). Demzufolge ist ersichtlich, dass die Mengen der Komponenten (la) und (Ib) so aufeinander abgestimmt sind, dass die N-H-Äquivalente der Komponente (Ib) im molaren Überschuss zu den Epoxidgruppen der Komponente (la) stehen.

Das epoxidfunktionelle Harzgemisch (la) enthält, in miteinander umgesetzter Form, zwei in der Folge beschriebene Komponenten (Ia1) und (Ia2). Bevorzugt besteht das Harzgemisch (la) aus diesen beiden Komponenten, wird also durch Umsetzung nur dieser beiden Komponenten hergestellt.

Bei der Komponente (Ia1) handelt es sich um mindestens eine di- und/oder multifunktionelle organische Epoxidverbindung.

Als Komponente (Ia1) kommen demnach die grundsätzlich bekannten Epoxidharze in Betracht. Bevorzugt ist, dass diese eingesetzten Epoxidverbindungen im Mittel ein Epoxidäquivalentgewicht von kleiner 400 g/mol aufweisen. Es hat sich gezeigt, dass ein entsprechend niedriges mittleres Epoxidäquivalenzgewicht und damit eine höhere Epoxidfunktionalität dieser Komponente in der letztlich herzustellenden Füllerschicht zu einer nochmals besseren Schleifbarkeit führt. Besonders bevorzugt liegt das mittlere Epoxidäquivalentgewicht bei kleiner 350 g/mol, bevorzugt kleiner 300 g/mol, nochmals bevorzugt kleiner 250 g/mol. Das mittlere Epoxidäquivalentgewicht kann über die Bestimmung des Epoxidäquivalents aller eingesetzten Epoxidverbindungen (Messmethode siehe Beispielteil) und Wichtung ihrer Massenanteile am Gesamtgewicht der Epoxidverbindungen erhalten werden. Genauso ist es möglich, beim Einsatz von bereits bestehenden Produkten wie Handelsprodukten (in denen die Epoxidverbindungen bereits kovalent verknüpft sein können), durch Analyse der Produkte das mittlere Epoxidäquivalentgewicht insoweit zu bestimmen, dass unmittelbar klar ist, dass es unter den o.g. Maximalgrenzen liegt (Analyse beispielsweise über Gaschromatographie (GC), Massenspektrometrie (MS)).

Bei Epoxidharzen handelt es sich bekanntermaßen um Polykondensationsharze, die im Grundmolekül im statistischen Mittel mehr als eine Epoxid-Gruppe enthalten. Beispielsweise handelt es sich dabei um durch Kondensation von Bisphenol A oder Bisphenol F mit Epichlorhydrin hergestellte Epoxidharze. Diese Verbindungen enthalten entlang der Kette Hydroxygruppen und an den Enden Epoxidgruppen. Je nach Kettenlänge der Epoxidharze ändert sich die Fähigkeit zur Vernetzung über die Epoxid-Gruppen, denn mit steigender Kettenlänge beziehungsweise Molmasse sinkt ebendiese Fähigkeit zur Vernetzung über die Epoxid-Gruppen. Im Rahmen der vorliegenden Erfindung können letztlich alle der dem Fachmann an sich bekannten Epoxidharze eingesetzt werden, sofern die innerhalb des oben genannten Bereichs des Epoxidäquivalentgewichts liegen. Beispielsweise können die weiter unten genannten und im Handel erhältlichen Epoxidharze, die als Lösung beziehungsweise Dispersion in organischen Lösemitteln oder Wasser erhalten werden können, eingesetzt werden.

Solche Epoxidharze können beispielsweise als 100 % Systeme oder auch Lösungen oder Dispersionen in organischen Lösemitteln oder Wasser erhalten werden.

Bevorzugt ist, dass es sich bei der Komponente (Ia1) um eine im Mittel difunktionelle Epoxidverbindung handelt, da ebendiese bei der oben genannten Standardsynthese über Epichlorhydrin entstehen.

Bevorzugt ist zudem, dass die Epoxidverbindung (Ia1) eine Bisphenol A basierte Epoxidverbindung ist, das heißt eine Epoxidverbindung, die über den Einsatz von Bisphenol A hergestellt worden ist. Insbesondere bedeutet dies auch, dass die Epoxidverbindung kein über die Synthese eingebrachtes Bisphenol F enthält. Es hat sich gezeigt, dass auf diese Weise wiederum ein positiver Einfluss auf die Schleifbarkeit der letztlich herzustellenden Füllerschicht resultiert.

Bei der Komponente (Ia2) handelt es sich um mindestens eine Verbindung X-R, wobei X eine gegenüber Epoxidgruppen reaktive funktionelle Gruppe ist und R ein organischer Rest enthaltend Polyoxyalkyleneinheiten, der keine weiteren Gruppen X enthält, ist. Bevorzugt wird genau eine Verbindung X-R als Komponente (Ia2) eingesetzt.

Bei den Gruppen X handelt es sich um die dem Fachmann bekannten Gruppen, beispielsweise primäre oder sekundäre Aminogruppen, Hydroxylgruppen, Carboxylgruppen oder Thiolgruppen.

Es ist entscheidend, dass die Verbindung X-R nur eine Gruppe X aufweist. Andernfalls ist ein negativer Einfluss auf die Schleifbarkeit der letztlich herzustellenden Füllerschicht festzustellen.

Bevorzugte Gruppen X sind Aminogruppen, darunter bevorzugt primäre Aminogruppen. Abgesehen von der guten Reaktivität von Aminogruppen mit Epoxidgruppen, weist das primäre Amin zwei N-H Äquivalente und damit Verknüpfungsstellen mit Epoxiden auf. Auf diese Weise kann ein Einbau der Verbindung X-R in eine Seitenkettenposition des Moleküls stattfinden. In Summe ergeben sich hierdurch wiederrum Vorteile für die Schleifbarkeit der Füllerschicht.

Die Gruppe R ist ein organischer Rest enthaltend Polyoxyalkyleneinheiten, insbesondere bevorzugt Polyethylen- oder Polypropyleneinheiten oder gemischte Polyethylen-/Polypropyleneinheiten. Bevorzugt ist, dass der organische Rest R, gegebenenfalls abgesehen von synthesebedingten Moleküleinheiten, aus Polyoxyalkyleneinheiten besteht. Solche Gruppen R werden der Einfachheit halber auch als Polyoxyalkylengruppen bezeichnet. Synthesebedingte Moleküleinheiten sind beispielsweise organische Reste von Molekülen, die zum Start des Aufbaus einer Polyoxyalkylenkette eingesetzt werden, beispielsweise ein Starteralkohol, über den die Polymerisation von Ethylenoxid und/oder Propylenoxid initiiert wird. Bevorzugt handelt es sich bei der Gruppe R um eine Polyethylen-, eine Polypropylen- oder um eine gemischt Polyethylen-/Polypropylengruppe.

Das gewichtsmittlere Molekulargewicht der Verbindung (Ia2) kann breit variieren und liegt beispielsweise im Bereich von 800 bis 2200 g/mol (bestimmt mittels Kopplung der Size Exclusion Chromatography mit Lichtstreuung).

Die genannten Verbindungen X-R können selbst hergestellt werden oder aber kommerziell erhalten werden. Beispielsweise können die offensichtlich bevorzugten Polyoxyalkylenmonoamine von der Firma Huntsman unter dem Handelsnamen "Jeffamine" erworben werden.

Das epoxidfunktionelle Harzgemisch (Ia) enthält, in miteinander umgesetzter Form, die beiden Komponenten (Ia1) und (Ia2). Demzufolge werden also die Epoxidgruppen der Komponente (Ia1) und die Gruppen X der Komponente (Ia2) miteinander umgesetzt. Entsprechende Reaktionsführungen und Bedingungen sind dem Fachmann bekannt und bedürfen keiner weiteren Erwähnung.

Die Komponente (la) ist ein epoxidfunktionelles Harzgemisch. Aus den beschriebenen Einsatzstoffen ergibt sich somit, dass die Komponenten (Ia1) und (Ia2) so eingesetzt werden, dass die Epoxidgruppen der Komponente (Ia1) im molaren stöchiometrischen Überschuss zu den reaktiven Einheiten der Gruppen X steht. Die Anzahl der reaktiven Einheiten meint die Anzahl an potentiellen Verknüpfungsstellen zu einer Epoxidgruppe. Für eine Hydroxylgruppe oder sekundäre Aminogruppe besteht beispielsweise pro Gruppe X eine reaktive Einheit. Für primäre Aminogruppen bestehen zwei reaktive Einheiten (zwei N-H Funktionen). Bevorzugt liegt das molare Verhältnis der Epoxidgruppen der Verbindung (Ia1) und den epoxid-reaktiven Einheiten der Gruppen X der Komponente (Ia2) von 10 bis 1,1, nochmals bevorzugt 5 bis 1,5, besonders bevorzugt von 3,5 bis 1,8.

Die Menge an Epoxidgruppen der Komponente (Ia1) kann auf bekannte Weise durch Bestimmung des Epoxidäquivalentgewichts erhalten beziehungsweise zielgerichtet eingestellt werden. Die Menge an reaktiven Einheiten der Gruppen X ergibt sich aus den an sich bekannten Messmethoden zur Bestimmung der Menge von funktionellen Gruppen X, beispielsweise durch die Bestimmung der Aminzahl, der OH-Zahl oder Säurezahl (DIN 53176:2002-11, DIN 53240-3:2016-03, DIN EN ISO 2114 Berichtigung 1: 2006-11).

Die Komponente (la) besitzt bevorzugt ein Epoxidäquivalentgewicht von 500 bis 1500 g/mol, nochmals bevorzugt 600 bis 1200 g/mol.

Die mit der Komponente (la) zu reagierende Komponente (Ib) umfasst mindestens ein di- und/oder multifunktionelles monomeres primäres und/oder sekundäres Amin (M). Bevorzugt besteht die Komponente (Ib) aus mindestens einem solchen Amin (M).

Beispiele geeigneter Amine (M) sind die bereits oben als Bestandteil der Harzkomponente (H) beschrieben. Alles dortigen Ausführungen und auch bevorzugten Varianten gelten entsprechend für die Amine in der Komponente (Ib).

Das Harzgemisch (I) ist ein aminofunktionelles Harzgemisch, dessen Herstellung somit in Bezug auf die funktionalen Gruppen der miteinander umzusetzenden Komponenten (la) und (Ib) einen molaren Überschuss der N-H-Äquivalente erfordert. Konkret beträgt das NH-Äquivalent des Harzgemisches (I) von 50 bis 140 g/mol, bevorzugt 70 bis 130 g/mol (Bestimmungsmethode siehe Beispielteil). Im Übrigen umfasst das Harzgemisch (I) einen Anteil von 17,5 bis 40 Gew.-%, bevorzugt 25 bis 35 Gew.-% an di- und/oder polyfunktionellen monomeren primären und/oder sekundären Aminen (M), das heißt der Komponente (Ib). Beide Kriterien sind für den Fachmann durch geeignete Wahl der molaren Mengen der beiden Komponenten und in dem Wissen, dass unter den an sich bekannten Bedingungen und Reaktionsführungen ein quantitativer Umsatz von Epoxidgruppen und N-H Funktionen erfolgt, anpassbar. Darüber hinaus geben die untenstehenden Beispiele einen nochmal genaueren Überblick. Mögliche Reaktionsführungen und entsprechende Bedingungen sind dem Fachmann bekannt und bedürfen keiner weiteren Erwähnung. Bevorzug wird das Harzgemisch (I) nach seiner Herstellung in Wasser dispergiert und liegt dann in wässriger Dispersion vor.

Das Harzgemisch (I) kann als solches wie oben beschrieben hergestellt und somit in wässriger Dispersion erhalten werden. Ebenso ist es möglich, eine wässrige Dispersion eines Harzgemisches (I) kommerziell zu erwerben (beispielsweise als Beckopox VEH 2849w/80WA (Fa. Allnex)).

### Stufe B

In einer zweiten Stufe (B) der Reaktionsabfolge werden zwei Ausgangskomponenten (IIa) und (IIb) in wässriger Phase miteinander umgesetzt, nämlich eine Komponente (IIa), die das aminofunktionelle Harzgemisch (I) enthält und eine Komponente (IIb), welche mindestens eine di- und/oder multifunktionelle organische Epoxidverbindung mit einem mittleren Epoxidäquivalentgewicht von kleiner 400 g/mol, bevorzugt kleiner 350 g/mol, nochmals bevorzugt kleiner 250 g/mol, enthält. Dabei entsteht, gegebenenfalls nach Entfernung von eingesetzten organischen Lösemitteln, die wässrige Dispersion (wD) enthaltend eine Harzkomponente (H). Die schon oben genauer genannten Eigenschaften der Harzkomponente (H) lassen erkennen, dass die Mengen der Komponenten (IIa) und (IIb) so aufeinander abgestimmt sind, dass die N-H-Äquivalente der Komponente (IIa) im molaren Überschuss zu den Epoxidgruppen der Komponente (IIb) stehen.

Bevorzugt wird als Komponente (IIa) das direkte und nur gegebenenfalls um Lösemittel oder Hilfsmittel wie Emulgatoren ergänzte Reaktionsprodukt der Stufe (A) eingesetzt. Denn das Harzgemisch (I) wird nach der Stufe (A) als wässrige Dispersion erhalten und kann damit direkt in der in wässriger Phase stattzufindenden Stufe (B) eingesetzt werden. Die Komponente (IIa) enthält bevorzugt neben dem genannten Reaktionsprodukt keine weiteren Bestandteile, die mit der Komponente (IIb) zur Reaktion gebracht werden können.

Die Komponente (IIb) besteht bevorzugt aus mindestens einer, bevorzugt genau einer di und/oder multifunktionellen organischen Epoxidverbindung mit einem Epoxidäquivalentgewicht, das den oben genannten Voraussetzungen genügt. Beispiele geeigneter Epoxidverbindungen sind die bereits oben als Komponente (Ia1) beschriebenen. Alle dortigen Ausführungen und auch bevorzugten Varianten gelten entsprechend für die Epoxidverbindungen in der Komponente (IIb).

Die wässrige Dispersion (wD) weist beispielsweise einen Festkörper von 25 bis 45 Gew.-% auf (Messmethode Beispielteil).

Der oben beschriebene Prozess ist eine bevorzugte Prozessvariante, die beispielsweise auch die Nutzung von bestehenden Handelsprodukten (beispielsweise den oben beschriebenen Beckopox VEH 2849w/80WA) erlaubt. So ist die erfindungsgemäße Dispersion (wD) im Falle des Einsatzes des vorgenannten Handelsproduktes durch einfache Nachmodifizierung mit einem entsprechenden Epoxid erhältlich (da abgesehen von dieser letzten Umsetzung bereits alle weiteren Umsetzungsprozesse bei der Herstellung des Handelsproduktes realisiert wurden). Selbstverständlich ist es aber auch möglich, eine andere Form der Bereitstellung der Dispersion (wD) und damit der darin enthaltenen Harzkomponente (H) zu wählen. So kann, beispielsweise durch Anpassung entsprechender Stöchiometrien von Aminen und Epoxiden, eine Bereitstellung in einem einstufigen Prozess realisiert werden, bei dem alle Ausgangskomponenten gemeinsam umgesetzt werden. Möglich wäre auch, zunächst die oben als Komponenten (Ia1) und (Ia2) bezeichneten Komponenten miteinander umzusetzen, und dann durch gleichzeitige Umsetzung dieses Zwischenproduktes mit weiteren Epoxiden und monomeren Aminen (M) zur Dispersion (wD) beziehungsweise der Harzkomponente (H) zu gelangen.

Bevorzugt ist, dass die Harzkomponente (H) aus dem mindestens einen di- und/oder polyfunktionellen monomeren primären und/oder sekundären Amin (M) sowie den polyfunktionellen polymeren organischen Amine mit primären und/oder sekundären Aminogruppen besteht.

Ebenfalls bevorzugt ist es, dass die polyfunktionellen polymeren organischen Amine mit primären und sekundären Aminogruppen aus den vorstehend genannten Ausgangsprodukten, in umgesetzter Form, bestehen. Demzufolge bestehen die Polyamine bevorzugt aus
(i) mindestens einer di und/oder multifunktionellen organischen Epoxidverbindung, wobei die Epoxidverbindungen im Mittel ein Epoxidäquivalentgewicht von kleiner 400 g/mol aufweisen,
(ii) mindestens einem monomeren Amin (M), wobei die Amine (M) zu mindestens 65 mol-% aus Aminen bestehen, die aus Aminogruppen und Kohlenwasserstoffeinheiten bestehen, und
(iii) mindestens einer Verbindung X-R, wobei X eine gegenüber Epoxidgruppen reaktive funktionelle Gruppe ist und R ein organischer Rest enthaltend Polyoxyalkyleneinheiten, der keine weiteren Gruppen X enthält, ist.
Die Mengen und Verhältnisse der einzelnen Ausgangskomponenten können vom Fachmann selbstverständlich problemlos angepasst werden. Sie sind ohnehin, innerhalb einer gewissen Gestaltungsfreiheit, so zu wählen, dass sich ein erfindungsgemäß zu realisierendes NH-Äquivalent und auch ein erfindungsgemäß zu realisierender Anteil monomerer Amine (M) ergibt.

Aus obigem folgt, dass die Komponente (i) äquivalent zu der oben im bevorzugten Prozess beschriebenen Komponente ((IIb), bevorzugt zur Komponente (Ia1) und der Komponente (IIb) ist, die Komponenten (ii) äquivalent zu der Komponente (Ib) ist und die Komponenten (iii) äquivalent zur Komponente (Ia2) ist. Die im Rahmen des Prozesses beschriebenen bevorzugten Ausführungen gelten selbstverständlich auch im Rahmen der Komponenten (i), (ii) und (iii).

### Wässrige Zweikomponenten (2K)-Beschichtungszusammensetzung

Nicht zuletzt betrifft die vorliegende Erfindung auch eine wässrige 2K-Beschichtungszusammensetzung enthaltend die wässrige Dispersion (wD).

Eine solche 2K-Zusammensetzung bedeutet bekanntermaßen, dass eine wie unten genauer definierte Komponente (1) (Stammlackkomponente) und eine wie unten definierte Komponente (2) (Härterkomponente) getrennt voneinander hergestellt und gelagert werden und erst kurz vor der Applikation zusammengegeben werden. Die Verarbeitungszeit beziehungsweise Topfzeit (das heißt die Zeit, in der die Beschichtungszusammensetzung bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist bekanntermaßen abhängig von den eingesetzten Bestandteilen in den Komponenten (1) und (2). Im Rahmen der vorliegenden Erfindung beträgt die Verarbeitungszeit der Beschichtungszusammensetzung bevorzugt mindestens 2 min bis zu 60 min, nochmals bevorzugt mindestens 5 min bis zu 60 min. Der Vorteil eines solchen Zweikomponenten-Beschichtungszusammensetzung liegt vor allem darin, dass insbesondere keine hohen Temperaturen zur Härtung notwendig sind. Bevorzugt wird die erfindungsgemäße Beschichtungszusammensetzung nach dem Aufbringen auf ein Substrat bei nicht mehr als 80°C, insbesondere bevorzugt nicht mehr als 65°C gehärtet.

Unter Härtung ist das dem Fachmann bekannte Vorgehen zu verstehen, das heißt die Überführung einer als Schicht auf ein Substrat aufgebrachten Beschichtungszusammensetzung in den gebrauchsfertigen Zustand, das heißt also in einen Zustand, in der das mit der jeweiligen Beschichtung ausgestattete Substrat bestimmungsgemäß verwendet werden kann. Im Zusammenhang mit der im Rahmen der vorliegenden Erfindung zentralen Aufgabe, nämlich dem Erhalt einer guten Schleifbarkeit, sind natürlich genau diese Schleifbarkeit und die darauffolgende Überlackierbarkeit Kriterien für die bestimmungsgemäße Verwendung. Die Härtung erfolgt insbesondere durch chemische Reaktion von reaktiven funktionellen Gruppen von Bindemittelbestandteilen, die in den unterschiedlichen Komponenten (1) und (2) des Beschichtungsmittels enthalten sind. Insbesondere zu nennen ist damit im Rahmen der vorliegenden Erfindung die Reaktion der Aminogruppen beziehungsweise N-H-Funktionen der Harzkomponente (H) und den Epoxidgruppen mindestens einer weiteren Harzkomponente, die sich dann in der jeweils anderen Hauptkomponente (Stammlackkomponenten oder Härterkomponente) der 2K Beschichtungszusammensetzung befindet. Durch diese Vernetzungsreaktionen und die parallel erfolgende Evaporation von gegebenenfalls vorhandenen organischen Lösemitteln und/oder Wasser wird ein Beschichtungsfilm gebildet, das heißt es wird eine gehärtete Beschichtungsschicht (gehärtete Beschichtung) hergestellt. Die Aktivierung der Reaktionen ist durch thermische Energie möglich, wobei im Fall der vorliegenden Erfindung aber der beschriebene Vorteil der nicht notwendigen hohen Temperaturen besteht.

Unter dem Begriff Bindemittel beziehungsweise Bindemittelbestandteil wird hierin entsprechend der einschlägigen DIN EN ISO 4618 der nichtflüchtige Anteil eines Beschichtungsstoffs ohne Pigmente und Füllstoffe verstanden. Spezielle Bindemittelbestandteile sind in diesem Sinne somit neben der Harzkomponente (H) auch die schon oben erwähnte andere Harzkomponente enthaltend funktionelle Gruppen zur Vernetzung mit N-H-Funktionen oder auch lacktypische Additive.

Schon der Übersichtlichkeit halber wird der Begriff Bindemittel aber hauptsächlich in Bezug auf die vornehmlich für die Filmbildung verantwortlichen Harzkomponenten der Stammlackkomponente (1) verwendet, während man die in der Härterkomponente (2) vorhandene Harzkomponente vornehmlich als Härter oder auch Vernetzungsmittel bezeichnet wird. Dabei enthält regelmäßig die Stammlackkomponente (1) neben dem Bindemittel und Lösemitteln alle oder die überwiegende Mehrheit von weiteren funktionellen Bestandteilen der Zusammensetzung, beispielsweise Pigmente, Füllstoffe und Additive, während die Härterkomponente (2) neben Lösemitteln und gegebenenfalls vorhandenen Additiven lediglich die zur Vernetzung vorgesehene Harzkomponente enthält. Die Begriffe Stammlackkomponente und Härterkomponente im Zusammenhang mit 2K Beschichtungszusammensetzungen sind dem Fachmann bekannt und haben innerhalb einer gewissen Gestaltungsbreite auch wesenskennzeichnenden und damit abgrenzenden Charakter.

Natürlich kann zur Komplettierung einer 2K Beschichtungszusammensetzung auch noch mindestens eine weitere Hauptkomponente hinzukommen. Das heißt neben der Stammlackkomponente (1) und der Härterkomponente (2) können weitere Bestandteile wie Lösemittel oder Additive in mindestens einer weiteren Hauptkomponente hinzugefügt werden, beispielsweise nachdem die beiden Hauptkomponenten (1) und (2) zusammengegeben wurden. Allerdings handelt es sich definitionsgemäß trotzdem um eine 2K Beschichtungszusammensetzung, da die Anzahl an Komponenten, welche die für die Filmbildung verantwortlichen, miteinander zu vernetzenden Bestandteile enthalten, gleich zwei ist.

Die 2K Beschichtungszusammensetzung ist ausgezeichnet als Füller und Grundierfüller geeignet beziehungsweise als solcher verwendbar. Demzufolge handelt es sich bei der 2K Beschichtungszusammensetzung bevorzugt um einen Füller oder Grundierfüller. Funktion, Ausgestaltung und Anwendungsbereich von Füllern und Grundierfüllern sind dem Fachmann grundsätzlich bekannt und haben insoweit abgrenzenden Charakter. Ein Füller wird in der Regel im Rahmen der Automobilserienlackierung als Zwischenschicht aufgebracht (auf die zuvor gehärtete Elektrotauchlackierung), separat gehärtet und dann mit Basislack und Klarlack überlackiert. Grundierfüller finden insbesondere im Bereich der Automobilreparaturlackierung Anwendung und sind dort zum Auffüllen von lokal beschädigten Bereichen in der Ursprungslackierung sowie zum Erhalt einer angemessenen Haftung auf dem Substrat und der Gewährleistung einer Korrosionsschutzwirkung verantwortlich.

Die 2K Beschichtungszusammensetzung enthält als zwingenden Bestandteil eine wässrige Dispersion (wD) enthaltend eine Harzkomponente (H). Dabei ist die Menge der Dispersion (wD) bevorzugt so gewählt, dass der Anteil der Harzkomponente (H), bezogen auf den Festkörper der Beschichtungszusammensetzung, 10 - 30 Gew.-%, nochmals bevorzugt 15 - 25 Gew.-% beträgt.

Die 2K Beschichtungszusammensetzung enthält des Weiteren mindestens eine weitere Harzkomponente, welche Epoxidgruppen enthält. Die Epoxidgruppen können mit den N-H-Funktionen unter Ausbildung von Netzwerkstrukturen reagieren und auf diese Weise zur Härtung einer aus der Beschichtungszusammensetzung hergestellten Beschichtungsschicht beitragen. Entsprechende Epoxidharze sind bekannt und sind auch weiter oben im Zusammenhang mit den Komponenten (Ia1) und (IIb) beschrieben. Bevorzugte Epoxidharze besitzen ein Epoxidäquivalenzgewicht von kleiner als 400 g/mol, bevorzugt 100 bis kleiner 400 g/mol, nochmals bevorzugt 150 bis 300 g/mol.

Der Anteil der weiteren Harzkomponente, bezogen auf den Festkörper der Beschichtungszusammensetzung, beträgt beispielsweise 15-40 Gew.-%, nochmals bevorzugt 20-30 Gew.-%.

Bevorzugt liegt das molare Verhältnis der N-H-Funktionen der Harzkomponente (I) und den Epoxidgruppen der weiteren Harzkomponente zwischen 0,7 :1 und 0,95 :1, wie beispielsweise bei 0,9:1.

Aus dem oben Gesagten folgt unmittelbar, dass die wässrige Dispersion (wD) enthaltend eine Harzkomponente (H) und die mindestens eine weitere Harzkomponente, welche Epoxidgruppen aufweist, in unterschiedlichen Hauptkomponenten der jedenfalls vorhandenen Komponenten der Zusammensetzung (Stammlackkomponente (1) und Härterkomponente (2)) enthalten sind.

Die 2K Beschichtungszusammensetzung ist wässrig, enthält also als Lösemittel jedenfalls Wasser. Eine genaue Definition von "wässrig" findet sich bereits weiter oben.

Die 2K Beschichtungszusammensetzung enthält bevorzugt noch weitere Bestandteile, insbesondere solche, die zur Eignung als Füller beziehungsweise Grundierfüller führen. In diesem Sinne zu nennen sind insbesondere Pigmente und Füllstoffe.

Bevorzugte Pigmente sind Schwarz- und/oder Weißpigmente. Bevorzugt enthält das Grundierungsmittel also mindestens ein Schwarzpigment oder mindestens ein Weißpigment oder mindestens ein Weiß- sowie ein Schwarzpigment. Dies bedeutet, dass das erfindungsgemäße Grundierungsmittel bevorzugt eine schwarze, eine weiße oder eine (in verschiedenen Abstufungen) graue Farbe aufweist. Natürlich ist nicht ausgeschlossen, dass auch weitere Pigmente enthalten sind.

Bevorzugte Schwarzpigmente sind die typischen organischen und anorganischen, insbesondere anorganischen, Schwarzpigmente, wie sie im Handel als Pulver erhältlich sind. Insbesondere zu nennen sind Pigmentruße (Farbruße), Eisenoxid (Fe3O4)-Pigmente wie die typischen synthetischen Eisenoxide (beispielsweise erhältlich unter dem Handelsnamen Bayferrox von der Firma Lanxess), Mischoxidpigmente wie Manganschwarz oder Spinellschwarz. Ganz besonders bevorzugt sind Pigmentruße (Farbruße) und Eisenoxid-Pigmente.

Bevorzugte Weißpigmente sind die typischen anorganischen Weißpigmente, wie beispielsweise Titandioxid (beispielsweise die unter der Handelsbezeichnung Kronos bekannten Rutil-Pigmente von der Firma Kronos), Zinkoxid, Zinksulfid oder Antimontrioxid. Ganz besonders bevorzugt ist Titandioxid, insbesondere in seiner Rutilmodifikation.

Weitere bevorzugte Pigmente sind die unter dem Oberbegriff Korrosionsschutzpigmente bekannten Pigmente. Dabei ist Zinkphosphat besonders bevorzugt. Auch wenn Zinkphosphat eine weiße Farbe hat, wird es aufgrund seiner Korrosionsschutzwirkung nicht als Weißpigment, sondern als Korrosionsschutzpigment eingeordnet.

Der Anteil der Pigmente beträgt bevorzugt 15-25 Gew.-%, insbesondere 20 Gew.-%, jeweils bezogen auf den Festkörper der Beschichtungszusammensetzung.

Als bevorzugt vorhandener Füllstoffe sind alle an sich bekannten und dem Fachmann geläufigen anorganischen und organischen Füllstoffe, bevorzugt anorganische Füllstoffe, zu nennen. Zu den Füllstoffen gehören also insbesondere die dem Fachmann bekannten Substanzen, die beispielsweise in körniger oder in Pulverform zum Erreichen bestimmter physikalischer Eigenschaften von Beschichtungsmitteln verwendet werden und im jeweiligen Anwendungsmedium unlöslich sind. Hierzu gehören insbesondere Carbonate wie Calciumcarbonat oder Bariumcarbonat, Sulfate wie Calciumsulfat und Bariumsulfat, Silikate und Schichtsilikate wie Talkum, Pyrophyllit, Glimmer, Kaolin, gefällte Calcium-, Aluminium-, Calcium-/Aluminium-, Natrium-/Aluminium-Silikate und Mullit, Kieselsäuren wie Quarz, Cristobalit, gefällte Kieselsäuren oder insbesondere pyrogene Kieselsäuren wie sie beispielsweise erhältlich sind unter der Handelsbezeichnung Aerosil (Firma Evonik), Metalloxide und -hydroxide wie beispielsweise Aluminiumhydroxid und Magnesiumhydroxid.

Der Anteil der Füllstoffe beträgt bevorzugt 30-50 Gew.-%, insbesondere 30-40 Gew.-%, jeweils bezogen auf den Festkörper der Beschichtungszusammensetzung.

Darüber hinaus kann die Beschichtungsmittelzusammensetzung noch mindestens ein Additiv enthalten. Beispiele für derartige Additive sind Lichtschutzmittel, Antioxidantien, Entlüftungsmittel, Emulgatoren, Slipadditive, Polymerisationsinhibitoren, Haftvermittler, Verlaufsmittel, filmbildende Hilfsmittel, Verdickungsmittel, Sag-Control-Agents (SCAs) oder Korrosionsinhibitoren. Sie werden in den üblichen und bekannten Mengen eingesetzt. Selbiges gilt für den möglichen Einsatz von organischen Lösemitteln, deren Menge aber so gewählt wird, dass sie den wässrigen Charakter der Beschichtungszusammensetzung nicht verändern.

Der Festkörpergehalt der 2K Beschichtungszusammensetzung kann je nach den Erfordernissen des Einzelfalls variieren, liegt aber bevorzugt im Bereich von 70-85 Gew.-%. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Die Herstellung der 2K Beschichtungszusammensetzung kann unter Einsatz der für die Herstellung von Beschichtungsmitteln üblichen und bekannten Mischverfahren und Mischaggregaten wie Rührkesseln, Rührwerksmühlen, Extrudern, Knetern, Ultraturrax, In-line-Dissolvern, statischen Mischern, Zahnkranzdispergatoren, Druckentspannungsdüsen und/oder Microfluidizern erfolgen. Dabei ist natürlich zu beachten, dass die Komponente (1) (Stammlackkomponente) sowie die Komponente (2) (Härterkomponente) getrennt voneinander hergestellt und gelagert werden und, wie oben beschrieben, erst kurz vor der Applikation der Beschichtungszusammensetzung auf ein Substrat zusammengegeben und gemischt werden.

Ein weiterer Gegenstand der vorliegenden Erfindung ist ein Verfahren zur Herstellung einer Beschichtung auf einem Substrat, bei dem die erfindungsgemäße Beschichtungsmittelzusammensetzung auf ein Substrat appliziert wird und anschließend ein Beschichtungsfilm gebildet wird. Selbstverständlich gelten im Rahmen des erfindungsgemäßen Verfahrens, in dem die Beschichtungsmittelzusammensetzung eingesetzt wird, ebenfalls die oben beschriebenen besonderen und bevorzugten Ausführungsformen hinsichtlich der Beschichtungsmittelzusammensetzung.

Die Applikation der erfindungsgemäßen Beschichtungsmittelzusammensetzung auf ein Substrat kann insbesondere in den im Rahmen der Fahrzeugindustrie üblichen Schichtdicken im Bereich von beispielsweise 5 bis 200 Mikrometer, bevorzugt 10 bis 150 Mikrometer, besonders bevorzugt 30 bis 70 Mikrometer, erfolgen. Die angegebenen Schichtdicken sind als Trockenfilmschichtdicken nach der unten beschriebenen Härtung zu verstehen. Dabei werden beispielsweise die bekannten Methoden wie Spritzen, Rakeln, Streichen, Giessen, Tauchen, Tränken, Träufeln oder Walzen angewendet. Vorzugsweise werden Spritzmethoden angewandt.

Nach der Applikation der erfindungsgemäßen Zusammensetzung wird daraus ein Polymerfilm beziehungsweise gehärteter Beschichtungsfilm gebildet. Die aufgebrachte Zusammensetzung wird also nach bekannten Methoden gehärtet. Die Härtung erfolgt bei Temperaturen von beispielsweise 15 bis 120°C, insbesondere 20 bis 80°C, ganz besonders bevorzugt von 20 bis 65°C. Diese bevorzugten, eher niedrigen Härtungstemperaturen ergeben sich insbesondere aus dem Umstand, dass die Beschichtungszusammensetzung ein (2K)-Beschichtungsmittel ist, bei welchem insbesondere für die thermische Vernetzung nur niedrige Härtungstemperaturen notwendig sind. Die Zeitdauer der Härtung kann je nach Einzelfall stark variieren und liegt beispielsweise zwischen 5 min und 16 Stunden, bevorzugt 20 min bis 80 min. Diese bevorzugten, eher niedrigen Härtungsdauern ergeben sich insbesondere aus dem Umstand, dass die erfindungsgemäße Zusammensetzung nur vergleichsweise kurze Härtungsdauern bei trotzdem vergleichsweise niedrigen Temperaturen benötigt, um trotzdem eine ausreichende Härte aufzuweisen, die das Schleifen der gehärteten Beschichtung ermöglicht. Eine insoweit ganz besonders bevorzugte Härtung erfolgt bei 40 bis 65°C für 20 bis 80 Minuten.

Der Härtung kann je nach Einzelfall gegebenenfalls ein Ablüften bei beispielsweise Raumtemperatur (etwa 15 und 25°C) für beispielsweise 1 bis 60 min vorausgehen. Unter Ablüften ist im Rahmen der vorliegenden Erfindung ein Abdunsten von organischen Lösemitteln und/oder Wasser zu verstehen, wodurch der Lack trocken, aber noch nicht gehärtet wird, insbesondere noch kein vollständig vernetzter Lackfilm gebildet wird.

Durch die Härtung erhält man dann das erfindungsgemäße beschichtete Substrat, welches ebenfalls Gegenstand der vorliegenden Erfindung ist. Gegenstand der vorliegenden Erfindung ist auch eine aus der Zusammensetzung hergestellte Beschichtung.

Als Substrate dienen beispielsweise metallische Substrate, bevorzugt solche wie sie im Rahmen der Automobilindustrie (Fahrzeugbau) eingesetzt werden. Vorteilhaft werden unlegierte und legierte Stähle und/oder Eisen-, Zink- sowie Aluminiumsubstrate und entsprechende Legierungen eingesetzt.

Wenn oben angegeben ist, dass die Zusammensetzung auf ein Substrat appliziert wird, bedeutet dies aber selbstverständlich nicht, dass die Zusammensetzung direkt auf ein metallisches Substrat aufgebracht werden muss. Vielmehr kann sich zwischen dem metallischen Substrat und der durch die Zusammensetzung aufgebauten Schicht noch mindestens eine weitere Schicht befinden. Dies ist beispielsweise dann der Fall, wenn die Beschichtungszusammensetzung als Füller in der Serienlackierung eingesetzt wird. Denn in einem solchen Fall wird sich zumindest eine Elektrotauchlackschicht zwischen der Füllerschicht und dem metallischen Substrat befinden. Anders ausgedrückt, ist das Substrat, auf dem die erfindungsgemäße Zusammensetzung aufgebracht wird, damit ein Metallsubstrat, welches mit einer Elektrotauchlackschicht beschichtet ist.

Wie bereits oben angedeutet, ist die erfindungsgemäße Beschichtungszusammensetzung allerdings besonders vorteilhaft als Grundierfüller im Bereich der Reparaturlackierung, insbesondere Automobilreparaturlackierung, einsetzbar, und besitzt dann Eigenschaften wie gute Haftung, Korrosionsschutz und Schleifbarkeit nach nur kurzer Härtung bei moderaten Temperaturen.

Demzufolge handelt es sich in besonderen Ausführungsform der vorliegenden Erfindung bei den Substraten um bereits vollständig lackierte, insbesondere mit Automobilmehrschichtlackierungen lackierte metallische Substrate, bei denen die jeweilige Mehrbeschichtung lokale Beschädigungen (Fehlstellen) aufweist. Insbesondere handelt es sich also um Automobilkarosserien oder Teile davon, die Beschädigungen wie beispielsweise Steinschlagschäden und ähnliches, aufweisen. In den beschädigten Bereichen ist also durch äußere Einwirkung die ursprüngliche Mehrschichtbeschichtung zumindest teilweise abgelöst. Die erfindungsgemäße Beschichtungsmittelzusammensetzung wird dann im Rahmen der Reparatur dieser beschädigten Bereiche, also der Reparaturlackierung, als Grundierfüller eingesetzt. In der Regel gehen im Rahmen der Reparaturlackierung der Applikation des Grundierungsmittels eine Reinigung und Schleifen des beschädigten ursprünglich beschichteten Substrats voraus. Dabei werden eventuell vorhandene, nur noch unzureichend haftende und teilabgelöste Bereiche der ursprünglichen Beschichtung und/oder bereits entstandene Korrosionsprodukte entfernt und dabei insbesondere auch das metallische Substrat lokal freigelegt. Es handelt sich somit um eine komplexe Substratoberfläche, welche unterschiedlichste Grenzflächen aufweist. Hierbei handelt es sich einmal um eine Grenzfläche zum komplett freigelegten metallischen Substrat. Weitere Grenzflächen und -kanten finden sich im Bereich zwischen den beschädigten, gesäuberten und geschliffenen Stellen sowie den diese Stellen umgebenden Bereichen mit intakter Ursprungslackierung. An all diesen Grenzflächen muss ein und dieselbe Beschichtungszusammensetzung eine ausreichende Haftung gewährleisten. Damit bietet das die erfindungsgemäße Zusammensetzung große Vorteile, da auch in diesem anspruchsvollen Bereich trotzdem eine hervorragende Haftung, Korrosionsbeständigkeit sowie Schleifbarkeit erhalten werden.

In bevorzugten Ausführungsformen der Erfindung wird nach der Herstellung einer gehärteten Beschichtung aus der erfindungsgemäßen Zusammensetzung, insbesondere einer Füller- oder Grundierfüllerschicht, noch weitere Beschichtungsmittel appliziert und eine Mehrschichtlackierung aufgebaut. Bei diesem weiteren Beschichtungsmitteln handelt es sich insbesondere um übliche Basislacke und Klarlacke.

Im Folgenden soll die Erfindung anhand von Beispielen erläutert werden.

### Beispiele

### Bestimmungsmethoden

### Anteil monomere Amine an wässrigen Dispersionen

### Die Bestimmung erfolgt gaschromatographischen nach DIN 51 405:

Die Proben werden direkt in den Splitinjektor eines Gaschromatographen mit Flammenionisationsdetektor eingespritzt und sowohl auf einer Säule mit polarer Phase (Polyethylenglykol; 50 m fused silica Kapillarsäule mit Polyethylenglykolphase) als auch auf einer unpolaren (Polydimethylsiloxan; 50 m fused silica Kapillarsäule mit Polydimethylsiloxanphase) getrennt. Die Auswertung erfolgt nach der ISTD-% Methode.

Ca. 100-500 mg Probe (je nach Amingehalt) werden auf einer Analysenwaage auf 0,1 mg genau in ein 5 ml Schnappdeckelgläschen eingewogen. Zur Probe werden ca. 5 % ISTD Diethylenglykoldimethylether auf 0,1 mg genau zugewogen. Die Proben werden mit 5 ml THF verdünnt. (Sollte sich die Probe in THF nicht lösen, muss ein geeignetes Lösemittel durch Versuche ermittelt werden).

Die so vorbereitete Probe wird auf einem Agilent 7890 Gaschromatographen untersucht. Die Injektion erfolgt mittels eines automatischen Probengebers.

### Gaschromatographische Bedingungen:

Ofenprogramm: 40°C (Haltezeit 5 min) (3°/min) → 100°C (10°/min) → 230°C (Haltezeit 5 min)
Trägergas: Wasserstoff
Trennsäulen: Agilent Innowax, Länge 50m, Filmdicke 0,2 µm, Durchmesser 0,2 mm, Druck 1,0 bar HP-1, Länge 50m, Filmdicke 0,33 µm, Durchmesser 0,2 mm, Druck 1,3 bar
Injektortemperatur: 250 °C (bei Bedarf niedriger)
Injektionsmenge: 0,3 µl (Handinjektion 0,3 - 0,6 µl)
Detektor: Flammenionisationsdetektor
Detektortemperatur: 275°C
Splitfluß: 15 ml / Minute

Die Identifizierung der Amine erfolgt anhand von Retentionszeiten auf der polaren und unpolaren Säule (siehe Vergleichschromatogramme). Bei unbekannten Komponenten muss eine GC/MS-Untersuchung durchgeführt werden.

Die nachgewiesenen Amine und der Innere Standard werden entsprechend den annähernden Verhältnissen in der Probe auf einer Analysenwaage auf 0,1 mg genau eingewogen. Die Konzentration der Amine in der Gesamtkalibrierlösung sollte der der Amine in der vorbereiteten Probe entsprechen (die Berechnung der Konzentrationen der Amine erfolgt durch das GC Analyzer Programm). Anschließend wird die Kalibrierlösung unter den gleichen Bedingungen wie die Probe untersucht und die substanzspezifischen Korrekturfaktoren ermittelt.

Die Berechnung der Aminanteile der Probe erfolgt mit Hilfe der GC Analyzer Programms nach der ISTD-% Methode.

### Epoxidäquivalentgewicht

Die Bestimmung erfolgte gemäß DIN EN ISO 3001.

### Festkörper (nicht flüchtiger Anteil)

Soweit nicht anders angegeben, wurde der Festkörper (auch Festanteil, Festkörpergehalt, nicht flüchtiger Anteil) nach DIN EN ISO 3251 bei 130°C; 60 min, Einwaage 1,0 g, bestimmt.

### Anteil polymere organische Amine (Polyamine) an wässrigen Dispersionen

Die Bestimmung erfolgte analog der Bestimmung des Festkörpers, wobei die Probe allerdings für 8 Stunden (anstelle von 60 min) bei 130°C gehalten wurde. Auf diese Weise wird gewährleistet, dass der Anteil an gegebenenfalls schwer flüchtigen zurückbleibenden monomeren Aminen (M) vernachlässigbar klein ist und das Messergebnis die dem Ergebnis zugeordnete Größe widerspiegelt.

### Anteil Harzgemisch (I) oder Harzkomponente an einer wässrigen Dispersion

Der Anteil ergibt sich aus der Summe des Anteils monomerer Amine und des Anteils an Polyaminen an wässrigen Dispersionen.

### Anteil monomere Amine oder Polyamine am Harzgemisch (I) oder der Harzkomponente (H)

Der Anteil der monomeren Amine am Harzgemisch (I) oder der Harzkomponente (H) ergibt sich aus dem Anteil monomerer Amine an einer wässrigen Dispersion dividiert durch die Summe des Anteils monomerer Amine und des Anteils an Polyaminen an dieser wässrigen Dispersion. Entsprechend wird der Anteil der Polyamine bestimmt.

### N-H-Äquivalent

Das N-H-Äquivalent der Harzkomponente (H) und des Harzgemisches (I) werden auf die folgende, aufeinander aufbauende Weise bestimmt.

### a)

Zunächst wird das N-H-Äquivalent des in wässriger Dispersion vorliegenden Harzgemisches (I) bestimmt. Dazu erfolgt zunächst die Bestimmung der unterschiedlichen Massenanteile von primären und sekundären Aminogruppen (jeweils als % Stickstoff) in der wässrigen Dispersion gemäß DIN EN ISO 9702 (Oktober 1998) nach der Methode für aliphatische Amine. Aus den erhaltenen Massenanteilen erhält man dann die molare Menge an N-H-Funktionen in 100 g der wässrigen Dispersion nach der folgenden Berechnung:
n(N-H) = (m(N aus primären Aminogruppen)/(14 g/mol))*2 + m(N aus sekundären Aminogruppen)/(14 g/mol) (wobei "m" für den jeweils gemessenen Massenanteil steht).

Aus der molaren Menge an N-H Funktionen und der Masse an Probe (100 g) folgt schließlich das N-H-Äquivalent der Probe (wässrige Dispersion), das heißt der Masse an Probe, in der sich 1 mol N-H Funktionen befinden.

Über die Bestimmung des Anteils des Harzgemisches der Probe ist dann das N-H-Äquivalent des Harzgemisches (I) zu berechnen: (N-H-Äquivalent(Harzgemisch (I)) = N-H-Äquivalent(Probe) * Anteil(Harzgemisch an Probe))

Der Anteil des Harzgemisches an der Probe ergibt sich als Summe aus Anteil des Polyamins und dem Anteil von monomeren Aminen (siehe oben).

### b)

Das N-H-Äquivalent der Harzkomponente (H) wird dann aus dem zuvor bestimmten N-H-Äquivalent des Harzgemisches (I), der in Stufe (B) eingesetzten Masse des Harzgemisches (I), der in Stufe (II) eingesetzten Masse der Komponente (IIb) sowie der molaren Menge an eingesetzten Epoxidgruppen der Komponente (IIb) (bestimmt über die eingesetzte Masse der Komponente (IIb) und dem Epoxidäquivalenzgewicht) berechnet. Dabei wird von einem quantitativen Umsatz der Epoxidgruppen mit den N-H-Funktionen ausgegangen. Die Gesamtmasse an Harzkomponente (H) wird durch Addition der Masse an eingesetztem Harzgemisch (I) und der Masse an eingesetzter Komponente (IIb) erhalten.

### Erfindungsgemäße wässrige Dispersionen (wD) und vergleichenden Dispersionen v(wD)

### Wässrige Dispersion (wD1)

683,00g Beckopox VEH 2849W (wässrige Dispersion eines Harzgemisches (I), wobei das Harzgemisch 27,5 Gew.-% monomere Amine (Isophorondiamin und Xylylendiamin) und 72,5 Gew.-% Polyamin enthält und zudem ein NH Äquivalent von 108g/mol aufweist) und 1663,77g demineralisiertes Wasser werden in einem Reaktionsgefäß zusammengebracht, kontinuierlich gerührt und 1 Stunde bei 95°C gehalten. Anschließend wird das Gemisch auf 70°C gekühlt und über einen Zeitraum von 4 Stunden kontinuierlich unter Rühren ein Gemisch aus 163,44g Bisphenol-A-Diglycidylether basiertem Epoxidharz mit einem mittleren Epoxidäquivalentgewicht von 186,5g/mol, 39,46g Polyalkylenpolyetherepoxid auf Basis Polypropylenoxid mit einem mittleren Epoxidäquivalentgewicht von 395g/mol, 81,96g Ethoxypropanol; 81,47g Methylethylketon und 81,72g Isobutanol zu dosiert und weiter 1 Stunde bei 70°C gehalten. Das so erhaltene Reaktionsprodukt wird auf 45°C abgekühlt. Die Viskosität des Produktes beträgt 150-250mPas bei 25°C.

In einem folgenden Prozessschritt werden die Prozesslösemittel Isobutanol und Methylethylketon unter Vakuum destillativ aus dem Produkt entfernt. Die resultierende wässrige Dispersion (wD1) hat einen Restgehalt Isobutanol und Methylethylketon von <0,5% (Gaschromatographie).

Der Gehalt an Harzkomponente (H) in der wässrigen Dispersion beträgt 33,4 Gew.-% (2,4 Gew.-% monomeres Amin, 31 % Polyamin). Die Harzkomponente hat somit einen Gehalt von 7,2 Gew.-% monomeres Amin (M). Die Harzkomponente hat zudem ein Aminäquivalentgewicht (N-H Äquivalentgewicht) von 171g/mol .

### Wässrige Dispersion (wD2)

683,00g Beckopox VEH 2849W (wässrige Dispersion eines Harzgemisches (I), wobei das Harzgemisch 27,5 Gew.-% monomere Amine (Isophorondiamin und Xylylendiamin) und 72,5 Gew.-% Polyamin enthält und zudem ein NH Äquivalent von 108g/mol aufweist), 266,11g Methylethylketon und 1395,96g (demineralisiertes) Wasser werden in einem Reaktionsgefäß zusammengebracht, kontinuierlich gerührt und 1 Stunde bei 70°C gehalten. Anschließend wird über einen Zeitraum von 4 Stunden kontinuierlich unter Rühren ein Gemisch aus 163,44g Bisphenol-A-Diglycidylether basiertem Epoxidharz mit einem mittleren Epoxidäquivalentgewicht von 186,5g/mol, 39,46g Polyalkylenpolyetherepoxid auf Basis Polypropylenoxid mit einem mittleren Epoxidäquivalentgewicht von 395g/mol, 81,96g Ethoxypropanol; 81,47g Methylethylketon und 81,72g Isobutanol zu dosiert und weiter 1 Stunde bei 70°C gehalten. Das so erhaltene Reaktionsprodukt wird auf 45°C abgekühlt. Die Viskosität des Produktes beträgt 150-250mPas bei 25°C.

In einem folgenden Prozessschritt werden die Prozesslösemittel Isobutanol und Methylethylketon unter Vakuum destillativ aus dem Produkt entfernt. Die resultierende wässrige Dispersion (wD2) hat einen Restgehalt Isobutanol und Methylethylketon von <0,5% (Gaschromatographie).

Der Gehalt an Harzkomponente (H) in der wässrigen Dispersion beträgt 33 Gew.-% (2,4 Gew.-% monomeres Amin, 31 % Polyamin). Die Harzkomponente hat somit einen Gehalt von 7,2 Gew.-% monomeres Amin (M). Die Harzkomponente hat zudem ein Aminäquivalentgewicht (N-H Äquivalentgewicht) von 171g/mol .

### Wässrige Dispersion (wD3)

### Stufe (A)

1000g Polyalkylenpolyethermonoamin auf Basis Propylenoxid/Ethylenoxid mit einem mittleren Molekulargewicht von 2000g/mol (Jeffamin M2070, eine primäre Amin Funktion (=2 NH Funktionen)) und 448,8g Bisphenol-A-Diglycidylether basiertem Epoxidharz mit einem mittleren Epoxidäquivalentgewicht von 186,5g/mol werden in einem Reaktionsgefäß gemischt und anschließend die Innentemperatur 1 Stunde bei 130°C und weitere 2 Stunden bei 80-90°C gehalten. Das so erhaltene Produkt hat ein Epoxidäquivalentgewicht von 1035g/mol. Die Viskosität des Produktes beträgt 6734mPas bei 23°C.

96,43g des so erhaltenen Reaktionsproduktes werden in einem Reaktionsgefäß mit 33,9g Isophorondiamin und 27,12g m-Xylylendiamin gemischt anschließend die Innentemperatur 1 Stunde bei 60°C und weitere 2 Stunden bei 80-90°C gehalten. Nach Abkühlen auf 50°C wird es mit Wasser verdünnt (Festkörperanteil 80%). Das in der Dispersion enthaltene Harzgemisch (I) hat ein Aminäquivalentgewicht (N-H Äquivalentgewicht) von 105g/mol. Die Viskosität des Produktes beträgt 1540mPas bei 23°C.

### Stufe (B)

683,00g des Reaktionsproduktes aus Stufe (A) und 1663,768g (demineralisiertes) Wasser werden in einem Reaktionsgefäß zusammengebracht, kontinuierlich gerührt und 1 Stunde bei 95°C gehalten. Anschließend wird das Gemisch auf 70°C gekühlt und über einen Zeitraum von 4h kontinuierlich unter Rühren ein Gemisch aus 163,44g Bisphenol-A-Diglycidylether basiertem Epoxidharz mit einem mittleren Epoxidäquivalentgewicht von 186,5g/mol, 39,46g Polyalkylenpolyetherepoxid auf Basis Polypropylenoxid mit einem mittleren Epoxidäquivalentgewicht von 395g/mol, 81,96g Ethoxypropanol; 81,47g Methylethylketon und 81,72g Isobutanol zu dosiert und weiter 1 Stunde bei ca.70°C gehalten. Das so erhaltene Reaktionsprodukt wird auf 45 °C abgekühlt. Die Viskosität des Produktes beträgt 150-250mPas bei 25°C.

In einem folgenden Prozessschritt werden die Prozesslösemittel Isobutanol und Methylethylketon unter Vakuum destillativ aus dem Produkt entfernt. Die resultierende wässrige Dispersion (wD3) hat einen Restgehalt Isobutanol und Methylethylketon von <0,5% (Gaschromatographie). Die Harzkomponente hat ein Aminäquivalentgewicht (N-H Äquivalentgewicht) von 177g/mol.

### v(wD2)

1200g (1,2mol bzw. 2,4 OH-Äquivalente) Polyalkylenpolyether auf Basis Ethylenoxid mit einem mittleren Molekulargewicht von 1200g/mol und 1984,62g (10,67 Epoxy-Äquivalente) Bisphenol-A-Diglycidylether basiertes Epoxidharz mit einem mittleren Epoxidäquivalentgewicht von 186,5g/mol werden in einem Reaktionsgefäß gemischt und anschließend die Innentemperatur unter kontinuierlichem rühren auf 120-130°C erhöht. Anschließend werden 6,5g Anchor 1040 (BF3 monoethylamin Katalysator) zugegeben und die Temperatur weiter auf 160°C erhöht und für weitere 4h bei 160°C gehalten, bis das Epoxid-Äquivalentgewicht 417g/mol erreicht. Danach wird auf 55°C gekühlt und 82,549g Di-n-Propylamin zugegeben. Es wird weiterhin bei 55°C gerührt bis das EEW 482g/mol erreicht. Danach wird auf 60°C erhitzt und weitere 174,11g (demineralisiertes) Wasser zugegeben.

1605,22g Isophorondiamin (entspricht 9,4mol bzw. 37,77 NH-Äquivalent) und 575,96g m-Xylylendiamin (entspricht 4,2mol bzw. 16,91 NH-Äq) werden in einem Reaktor gemischt und auf eine Innentemperatur von 60°C erwärmt. Anschließend wird über einen Zeitraum von 30min 3447,78g des obigen Reaktionsproduktes unter kontinuierlichem Mischen zugegeben. Dabei erhöht sich die Innentemperatur auf ca. 75°C und es wird bei dieser Temperatur für weitere 90min gerührt. Danach wird n-Butylglycidylether unter rühren über 20min zugegeben. Dabei erhöht sich die Innentemperatur auf ca. 80°C und es wird bei dieser Temperatur für weitere 60min gerührt. Danach werden weitere 1374g (demineralisiertes) Wasser zugegeben und das Produkt dabei auf 40°C abgekühlt.

Das im Reaktionsgemisch enthaltene Harzgemisch hat ein Aminäquivalentgewicht (N-H Äquivalentgewicht) von 125g/mol.

### v(wD3)

897,41g v(wD2) und 1868,00g demineralisiertes Wasser werden in einem Reaktor unter rühren auf 95°C erhitzt. Danach wird auf 70°C abgekühlt und über einen Zeitraum von 2 Stunden ein Mischung aus 163,44g (0,437mol) Bisphenol-A-Diglycidylether basiertem Epoxidharz mit einem mittleren Epoxidäquivalentgewicht von 186,5g/mol , 39,46g Polyalkylenpolyetherepoxid auf Basis Polypropylenoxid mit einem mittleren Epoxidäquivalentgewicht von 395g/mol , 81,96g Ethoxypropanol; 81,47g Methylethylketon und 81,72g Isobutanol zu dosiert und weiter 1 Stunde bei ca.70°C gehalten.

Das so erhaltene Reaktionsprodukt wird auf 45 °C abgekühlt. Die Viskosität des Produktes beträgt 150-500mPas bei 25°C.

In einem folgenden Prozessschritt werden die Prozesslösemittel Isobutanol und Methylethylketon unter Vakuum destillativ aus dem Produkt entfernt. Die resultierende wässrige Dispersion hat einen Restgehalt Isobutanol und Methylethylketon von <0,5%. Das in der Dispersion enthaltene Harzgemisch hat ein Aminäquivalentgewicht (N-H Äquivalentgewicht) von 203g/mol.

### v(wD6)

Die Dispersion v(wD6) wurde analog der Stufe (A) der Dispersion (wD3) hergestellt, wobei anstelle einer Mischung von Isophorondiamin und m-Xylylendiamin ausschließlich m-Xylylendiamin eingesetzt wurde. Der Anteil m-Xylylendiamin wurde entsprechend erhöht, um zu gewährleisten, dass dieselbe molare Menge an monomerem Amin eingesetzt wurde.

Das in der Dispersion enthaltene Harzgemisch hat ein Aminäquivalentgewicht (N-H Äquivalentgewicht) von 100g/mol.

Tabelle A gibt nochmal einen Überblick über die hergestellten wässrigen Dispersionen. Weiterhin aufgeführt sind kommerziell erworbene weitere Dispersionen, die als zusätzliche vergleichende Dispersionen v(wD) in wässrigen Beschichtungszusammensetzungen (siehe unten) eingesetzt werden.

**Tabelle A:**

| **Wässrige Dispersionen** | |
|---|---|
| (wD1) | Siehe Synthese oben |
| (wD2) | Siehe Synthese oben |
| (wD3) | Siehe Synthese oben |
| v(wD1) | Beckopox VEH 2849W |
| v(wD2) | Siehe Synthese oben |
| v(wD3) | Siehe Synthese oben |
| v(wD4) | Beckopox EH 613 (N-H-Äquivalent (Harz) = 116 g/mol) |
| v(wD5) | Beckopox EH 623w (N-H-Äquivalent (Harz) = 160 g/mol), enthält Acrylnitril in der Aminkomponente |
| v(wD6) | Siehe Synthese oben |

### Erfindungsgemäße Beschichtungszusammensetzungen und vergleichende Beschichtungszusammensetzungen

Unterschiedliche erfindungsgemäße und vergleichende Beschichtungszusammensetzungen wurden nach der folgenden allgemeinen Herstellvorschrift hergestellt.

Die Stammlackkomponente (1) und Härterkomponente (2) einer Beschichtungszusammensetzung wurden durch Zusammengeben der jeweiligen Bestandteile und innige Vermischung in einem Dissolver und gegebenenfalls einer Perlmühle hergestellt. Die Bestandteile und deren Mengen sind nachfolgenden Tabellen B und C zu entnehmen.

Zur Herstellung der Beschichtungszusammensetzungen als solcher wurden die Stammlackkomponenten jeweils mit den Härterkomponenten sowie gegebenenfalls weiterem Wasser vermischt. Die Zusammensetzungen wurden innerhalb einer Stunde nach ihrer Fertigstellung wie unten beschrieben verwendet, das heißt auf ein Substrat appliziert und im weiteren Verlauf gehärtet.

**Tabelle B: Beschichtungszusammensetzungen mit Stammlackkomponenten enthaltend wässrige Dispersionen (wD) und v(wD)**

| **Stammlackkomponenten** | **E1** | **E2** | **V1** | **E3** | **V2** | **V3** | **V4** |
|---|---|---|---|---|---|---|---|
| | | | | | | | |
| **Bestandteil** | **Gew.-Teile** | **Gew.-Teile** | **Gew.-Teile** | **Gew.-Teile** | **Gew.-Teile** | **Gew.-Teile** | **Gew.-Teile** |
| (wD2) | 42,75 | 48,80 | | 47,00 | | | 48,8 |
| v(wD1) | | | 50,00 | | | | |
| v(wD5) | | | | | 16,80 | | |
| v(wD4) | | | | | | 16,00 | |
| Disperbyk 2012 | 1,00 | | | | | | |
| Disperbyk 199 | | 1,00 | 1,00 | 1,50 | 1,50 | 1,50 | 1,0 |
| AEROSIL R 972 | 1,00 | | | | | | |
| BYK 011, 29% | | 0,30 | 0,30 | 0,60 | 0,60 | 0,60 | 0,3 |
| BYK-023, 18% | 0,25 | | | | | | |
| TITAN RUTIL TR 81 | 13,20 | 13,30 | 13,30 | 13,20 | 12,00 | 12,00 | 13,3 |
| SILFIT Z 91 | | 7,90 | 7,90 | | | | 7,7 |
| TALKUM FINNTALC M 30 | 9,50 | | | | | | |
| MICRO TALC IT EXTRA | | 7,10 | 7,00 | 9,50 | 8,00 | 8,00 | 7,1 |
| ALUMINIUMSILIKAT ASP 600 | 14,60 | 7,50 | 7,60 | 14,60 | 11,00 | 11,00 | 7,6 |
| LF BOWSEI MP-620 | 1,50 | 1,50 | 1,50 | 1,50 | 1,50 | 1,50 | 1,5 |
| BLANC FIXE N | 7,60 | 4,00 | 4,00 | 7,60 | 7,00 | 7,00 | 4,0 |
| NOVACITE L-207 A | | 2,00 | 2,00 | | | | 2,0 |
| BYK - 346 | 1,00 | | | | | | |
| BYK-348 | | 0,10 | 0,10 | 0,10 | 0,10 | 0,10 | 0,1 |
| Halox 570 | | 0,50 | 0,50 | 0,50 | 0,50 | 0,50 | 0,5 |
| Wasser | 7,60 | 6,00 | 9,80 | 3,90 | 41,00 | 41,80 | 6,0 |
| **Summe** | **100** | **100** | **105** | **100** | **100** | **100** | **100** |

| **Härterkomponenten** | **E1** | **E2** | **V1** | **E3** | **V2** | **V3** | **V4** |
|---|---|---|---|---|---|---|---|
| | | | | | | | |
| **Bestandteil** | **Gew.-Teile** | **Gew.-Teile** | **Gew.-Teile** | **Gew.-Teile** | **Gew.-Teile** | **Gew.-Teile** | **Gew.-Teile** |
| Epoxidharz (100 %) mit einem EEW von 185 g/mol | 14,04 | 15,91 | 27,38 | 16,38 | 14,4 | 21,8 | |
| BUTYLACETAT 98-100% | 9,16 | | | | | | |
| METHYLISOAMYLKETON (MIAK) | | 2,72 | 4,68 | 2,8 | 2,5 | 3,7 | |
| BUTYLGLYKOLACETAT | | 7,66 | 13,17 | 7,882 | 6,9 | 10,5 | |
| SILQUEST A-187 | 0,80 | 0,91 | 1,57 | 0,94 | 0,8 | 1,2 | |
| Epoxidharz (100 %) mit einem EEW von 450 g/mol | | | | | | | 67,7 |
| Wasser, VE | | | | | | | 26,3 |
| **Summe Härter** | **24,00** | **27,20** | **46,80** | **28** | **24,6** | **37,3** | **94,0** |

| | | | | | | | |
|---|---|---|---|---|---|---|---|
| **Wasserzusatz** | **E1** | **E2** | **V1** | **E3** | **V2** | **V3** | **V4** |
| | | | | | | | |
| | **Gew.-Teile** | **Gew.-Teile** | **Gew.-Teile** | **Gew.-Teile** | **Gew.-Teile** | **Gew.-Teile** | **Gew.-Teile** |
| Wasser | 15,5 | 12,0 | 16,0 | 17,0 | 6,5 | 13,0 | 0,0 |

| | | | | | | | |
|---|---|---|---|---|---|---|---|
| **Kenndaten** | **E1** | **E2** | **V1** | **E3** | **V2** | **V3** | **V4** |
| | | | | | | | |
| Pigment zu Bindemittelverhältnis (P/B) | 1,6 | 1,4 | 1,0 | 1,4 | 1,4 | 1,1 | 0,8 |
| Auslaufzeit DIN4 Anfall in s | 19 | 20 | 20 | 20 | 20 | 20 | 23 |

**Tabelle C: Beschichtungszusammensetzungen mit Stammlackkomponenten enthaltend Epoxidharze**

| **Stammlackkomponenten** | **E4** | **E5** | **V5** | **V6** | **E6** | **V7** | **V8** |
|---|---|---|---|---|---|---|---|
| | | | | | | | |
| **Bestandteil** | **Gew.-Teile** | **Gew.-Teile** | **Gew.-Teile** | **Gew.-Teile** | **Gew.-Teile** | **Gew.-Teile** | **Gew.-Teile** |
| Epoxidharz (100 %) mit einem EEW von 198 g/mol. | 33,20 | 33,20 | 33,20 | 33,20 | 33,20 | 33,20 | 33,20 |
| Wasser | 15,00 | 15,00 | 15,00 | 15,00 | 15,00 | 15,00 | 15,00 |
| Disperbyk 199 | 2,00 | 2,00 | 2,00 | 2,00 | 2,00 | 2,00 | 2,00 |
| BYK 011, 29% | 0,30 | 0,30 | 0,30 | 0,30 | 0,30 | 0,30 | 0,30 |
| TITAN RUTIL TR 81 | 12,90 | 12,90 | 12,90 | 12,90 | 12,90 | 12,90 | 12,90 |
| MICRO TALC IT EXTRA | 12,50 | 12,50 | 12,50 | 12,50 | 12,50 | 12,50 | 12,50 |
| ALUMINIUMSILIKAT ASP 600 | 9,80 | 9,80 | 9,80 | 9,80 | 9,80 | 9,80 | 9,80 |
| BLANC FIXE N | 4,40 | 4,40 | 4,40 | 4,40 | 4,40 | 4,40 | 4,40 |
| LF BOWSEI MP-620 | 1,50 | 1,50 | 1,50 | 1,50 | 1,50 | 1,50 | 1,50 |
| NOVACITE L-207 A | 2,00 | 2,00 | 2,00 | 2,00 | 2,00 | 2,00 | 2,00 |
| Wasser | 5,00 | 5,00 | 5,00 | 5,00 | 5,00 | 5,00 | 5,00 |
| BYK 333 | 0,50 | 0,50 | 0,50 | 0,50 | 0,50 | 0,50 | 0,50 |
| Wasser | 0,90 | 0,90 | 0,90 | 0,90 | 0,90 | 0,90 | 0,90 |
| **Summe** | **100** | **100** | **105** | **100** | **100** | **100** | **100** |

| | | | | | | | |
|---|---|---|---|---|---|---|---|
| **Härterkomponenten** | **E4** | **E5** | **V5** | **V6** | **E6** | **V7** | **V8** |
| | | | | | | | |
| **Bestandteil** | **Gew.-Teile** | **Gew.-Teile** | **Gew.-Teile** | **Gew.-Teile** | **Gew.-Teile** | **Gew.-Teile** | **Gew.-Teile** |
| (wD1) | 54,81 | | | | | | |
| (wD2) | | 56,81 | | | | | |
| (wD3) | | | | | 65,38 | | |
| v(wD6) | | | 31,35 | | | | |
| v(wD1) | | | | 33,09 | | | |
| v(wD2) | | | | | | 19,31 | |
| v(wD3) | | | | | | | 62,81 |
| BUTYLGLYKOL | 1,22 | 1,21 | 0,69 | 0,72 | 1,21 | 0,95 | 1,58 |
| Halox 570 | 0,60 | 0,61 | 0,34 | 0,36 | 0,61 | 0,47 | 0,79 |
| Wasser | 4,26 | 1,97 | 1,92 | 2,03 | | 26,67 | 13,83 |
| **Summe Härter** | **60,9** | **60,6** | **34,3** | **36,2** | **67,2** | **47,4** | **79,0** |

| | | | | | | | |
|---|---|---|---|---|---|---|---|
| **Wasserzusatz** | **E4** | **E5** | **V5** | **V6** | **E6** | **V7** | **V8** |
| | | | | | | | |
| | **Gew.-Teile** | **Gew.-Teile** | **Gew.-Teile** | **Gew.-Teile** | **Gew.-Teile** | **Gew.-Teile** | **Gew.-Teile** |
| Wasser | 0 | 0 | 11 | 5 | 0 | 2 | 0 |

| | | | | | | | |
|---|---|---|---|---|---|---|---|
| **Kenndaten** | **E4** | **E5** | **V5** | **V6** | **E6** | **V7** | **V8** |
| | | | | | | | |
| Pigment zu Bindemittelverhältnis (P/B) | 1,1 | 1,1 | 1,4 | 1,4 | 1,1 | 1,2 | 1,0 |
| Auslaufzeit DIN4 Anfall in s | 24 | 24 | 24 | 24 | 26 | 24 | 16 |

### Schleifbarkeit

Zur Prüfung der Eignung der Beschichtungszusammensetzungen als Grundierfüller beziehungsweise zur Ermittlung des Schleifverhaltens wurden Beschichtungen nach der folgenden Herstellvorschrift hergestellt und anschließend hinsichtlich ihrer Schleifbarkeit untersucht.

Als Substrate wurden Stahltafeln (60 cm x 50 cm) verwendet. Diese wurden wie folgt vorbehandelt / gereinigt: Reinigen mit 360-4 Glasurit Blechreinigungsmittel, Schleifen mit P80 von Mirka, Typ Gold, erneutes Reinigen vom Schleifstaub mit 360-4 Glasurit. 15 Min ablüften lassen.

Die Beschichtungszusammensetzungen wurden aufgerührt und in einem dünnen, geschlossenen Spritzgang mit einer Standard Lackierpistole (beispielsweise SATA 100 B F 1,6 mm RP, mit 2,0bar) auf das Substrat lackiert, 5 min abgelüftet, in einem weiteren satten Spritzgang lackiert, 10 min abgelüftet und dann für unterschiedliche Zeiten (35 bis 60 min) bei einer Temperatur von 60°C im Ofen oder 14 bis 16 Stunden bei Raumtemperatur gehärtet. Die Schichtdicke lag jeweils zwischen 60 und 80 Mikrometern (Dualscope MP40, Sonde ED10 Fa. Fischer).

Nach der Härtung wurden die Beschichtungen beziehungsweise beschichteten Substrate für 20 min bei 20°C gelagert und anschließend anwendungstechnisch untersucht.

Dazu wurde Kontrollschwarz 09560 Black (Fa. 3M) auf die beschichtete Oberfläche aufgetragen und mit Excenter (FESTOOL LEX3) 5 mm Hub und Schleifpapier von RODIM, Typ Standard P400 trocken geschliffen bis das Kontrollschwarz komplett abgetragen war.

Die Schleifbarkeit wurde wie folgt bewertet:

### Beurteilung der Schleifbarkeit:

### Beurteilung des Schleifpapiers:

0 -> kein Ansetzen (sehr gute Schleifbarkeit)
1 -> minimales Ansetzen (noch akzeptable Schleifbarkeit)
2 -> Ansetzen, Bildung von kleinen "Knötchen" (schlechte Schleifbarkeit)
3 -> starkes Ansetzen, Bildung von "Knötchen" (Abstandshalter) (sehr schlechte Schleifbarkeit)

Das Ansetzen des Beschichtungsmaterials auf dem Schleifpapier ist durch die Verwendung des Kontrollschwarz sehr gut identifizierbar. Kein Ansetzen bedeutet, dass das abgeschliffene Material als Feinstaub anfällt und damit weder das Schleifpapier zusetzt, noch zu schwer entfernbaren Rückständen auf der Beschichtungsoberfläche führt.

Die Ergebnisse sind in den Tabellen D und E dargestellt. Dabei wird durch den Buchstaben "B" vor der jeweiligen Beschichtungszusammensetzung angezeigt, dass es sich um eine gehärtete Beschichtung handelt.

**Tabelle D: Schleifergebnisse**

| | **BE1** | **BE2** | **BV1** | **BE3** | **BV2** | **BV3** | **BV4** |
|---|---|---|---|---|---|---|---|
| | | | | | | | |
| Trocknungszeit in min | 35 | 35 | 35 | 40 | 40 | 40 | 40 |
| Trocknungstemperatur in °C | 60 | 60 | 60 | 60 | 60 | 60 | 60 |
| **Schleifergebnis** | **0** | **1** | **3** | **0** | **3** | **2** | **3** |

Die Ergebnisse zeigen, dass die erfindungsgemäßen Beschichtungen (hergestellt aus erfindungsgemäßen Beschichtungszusammensetzungen), eine deutlich verbesserte Schleifbarkeit aufweisen. Insbesondere der Vergleich der erfindungsgemäßen Systeme mit dem System BV1 zeigen, dass die Epoxid-Nachmodifizierung des Handelsprodukts Beckopox VEH 2849 und die damit verbundene Erhöhung des N-H-Äquivalents (und damit auch des Molekulargewichts) zu einer deutlichen Verbesserung der Schleifbarkeit führt. Auch der Einsatz des Handelsprodukts Beckopox EH 613 (v(wD4)) mit einem zu niedrigen N-H-Äquivalent führt nicht zu zufriedenstellenden Ergebnissen bei der Schleifbarkeit (BV3). Selbiges gilt für den Einsatz von Beckopox EH 623w (v(wD5)), welches Acrylnitril in der Aminkomponente enthält. Nicht zuletzt zeigt das System BV4, dass der Einsatz eines Epoxidharzes mit einem zu hohen Epoxidäquivalent von 450 g/mol zu einer schlechten Schleifbarkeit führt.

**Tabelle E: Schleifergebnisse:**

| | **E4** | **E5** | **V5** | **V6** | **E6** | **V7** | **V8** |
|---|---|---|---|---|---|---|---|
| | | | | | | | |
| Trocknungszeit in min | 40 | 40 | 40 | 40 | 40 | 40 | 40 |
| Trocknungstemperatur in °C | 60 | 60 | 60 | 60 | 60 | 60 | 60 |
| **Schleifergebnis** | **0** | **0** | **3** | **3** | **3** | **3** | **3** |
| | | | | | | | |
| Trocknungszeit in min | 50 | 50 | 50 | 50 | 50 | 50 | 50 |
| Trocknungstemperatur in °C | 60 | 60 | 60 | 60 | 60 | 60 | 60 |
| **Schleifergebnis** | | | **3** | **2** | **1** | **3** | **3** |
| | | | | | | | |
| Trocknungszeit in min | 60 | 60 | 60 | 60 | 60 | 60 | 60 |
| Trocknungstemperatur in °C | 60 | 60 | 60 | 60 | 60 | 60 | 60 |
| **Schleifergebnis** | | | **3** | **0** | **0** | | |

Wiederum zeigen die Ergebnisse deutlich, dass die erfindungsgemäßen Systeme zu einer verbesserten Schliefbarkeit führen. Während die Systeme E4 und E5 bereits bei einer Trocknungszeit von nur 40 min bereits optimal schleifbar sind, ist das System E6 zumindest bei einer Trocknungszeit von 50 min annehmbar schleifbar. Alle Vergleichssysteme sind bei einer Trocknungszeit von 50 min absolut ungenügend oder schlecht schleifbar.

### Weitere Untersuchungen

Im Übrigen wurden anhand der Beschichtungszusammensetzungen auch Mehrschichtlackierungen (unter Verwendung von Standard-Basislacken und - Klarlacken hergestellt und zudem auch vorher hergestellte Mehrschichtlackierungen, die Fehlstellen aufwiesen, unter Anwendung der Beschichtungszusammensetzungen als Grundierfüller repariert. Bei letzterem wurden die Beschichtungszusammensetzungen auf eine auf einem metallischen Substrat angeordnete Mehrschichtlackierung, die Fehlstellen aufwies, in den Bereichen der Fehlstellen appliziert, gehärtet und geschliffen. Danach erfolgte die Applikation von Basislack und Klarlack. Die erfindungsgemäßen Systeme führten zu einer hervorragenden Haftung des Gesamtaufbaus und sind somit optimal einsetzbar.

## Patentansprüche

1. Wässrige Harzdispersion (wD) enthaltend eine Harzkomponente (H) enthaltend mindestens ein di- und/oder polyfunktionelles monomeres primäres und/oder sekundäres Amin (M) sowie polyfunktionelle polymere organische Amine mit primären und/oder sekundären Am inogruppen
wobei die Harzkomponente (H) ein NH-Äquivalent von 150 bis 400 g/mol und einen Gewichtsanteil an di- und/oder polyfunktionellen monomeren organischen Aminen (M) von 5 bis 15 Gew.-% aufweist,
wobei ferner die polyfunktionellen polymeren organischen Amine mit primären und sekundären Aminogruppen, in miteinander umgesetzter Form,
(i) mindestens eine di und/oder multifunktionelle organische Epoxidverbindung, wobei die Epoxidverbindungen im Mittel ein Epoxidäquivalentgewicht von kleiner 400 g/mol aufweisen,
(ii) mindestens ein monomeres Amin (M), und
(iii) mindestens eine Verbindung X-R, wobei X eine gegenüber Epoxidgruppen reaktive funktionelle Gruppe ist und R ein organischer Rest enthaltend Polyoxyalkyleneinheiten, der keine weiteren Gruppen X enthält, ist,
enthalten,
und wobei die Amine (M) zu mindestens 65 mol-% aus Aminen bestehen, die aus Aminogruppen und Kohlenwasserstoffeinheiten bestehen.

2. Wässrige Harzdispersion (wD) nach Anspruch 1, **dadurch gekennzeichnet, dass** die Amine (M) difunktionelle primäre und/oder sekundäre Amine, bevorzugt difunktionelle primäre Amine sind.

3. Wässrige Harzdispersion (wD) nach Anspruch 1 oder 2, **dadurch gekennzeichnet, dass** die Harzkomponente (H) ein N-H Äquivalent von 170 bis 250 g/mol aufweist.

4. Wässrige Harzdispersion (wD) nach Anspruch 1 bis 3, **dadurch gekennzeichnet, dass** die Gruppe X der Verbindung (iii) eine primäre Aminogruppe ist.

5. Wässrige Harzdispersion (wD) nach Anspruch 1 bis 4, **dadurch gekennzeichnet, dass** die Verbindung (iii) ein primäres Polyoxyalkylenmonoamin ist.

6. Wässrige Harzdispersion (wD) nach Anspruch 1 bis 5, **dadurch gekennzeichnet, dass** die mindestens eine di und/oder multifunktionelle organische Epoxidverbindung der Komponente (i) im Mittel ein Epoxidäquivalentgewicht von kleiner 250 g/mol aufweist.

7. Wässrige Harzdispersion (wD) nach Anspruch 1 bis 6, **dadurch gekennzeichnet, dass** die polymeren organischen Amine aus den Komponenten (i), (ii) und (iii) bestehen.

8. Wässrige Harzdispersion (wD) nach Anspruch 1 bis 7, **dadurch gekennzeichnet, dass** die Harzkomponente (H) aus dem mindestens einen di- und/oder polyfunktionellen monomeren primären und/oder sekundären Amin (M) sowie den polyfunktionellen polymeren organischen Amine mit primären und/oder sekundären Aminogruppen besteht.

9. Wässrige Harzdispersion (wD) nach Anspruch 1 bis 8, **dadurch gekennzeichnet**, die Amine (M) zu mindestens 75 mol-%, bevorzugt zu mindestens 90 mol-%, besonders bevorzugt zu 100 mol-% aus Aminen bestehen, die aus Aminogruppen und Kohlenwasserstoffeinheiten bestehen.

10. Wässrige Zweikomponenten-Beschichtungszusammensetzung enthaltend eine Stammlackkomponente (1) und eine Härterkomponente (2), wobei
I) die Stammlackkomponente (1) mindestens eine wässrige Dispersion gemäß einem der Ansprüche 1 bis 9 enthält und die Härterkomponente (2) mindestens ein Epoxidharz enthält, wobei die Epoxidharze im Mittel ein Epoxidäquivalentgewicht von kleiner 400 g/mol aufweisen,
oder
II) die Stammlackkomponente (1) mindestens ein Epoxidharz enthält, wobei die Epoxidharze im Mittel ein Epoxidäquivalentgewicht von kleiner 400 g/mol aufweisen, und die Härterkomponente (2) mindestens eine wässrige Dispersion gemäß einem der Ansprüche 1 bis 9 enthält.

11. Beschichtungszusammensetzung nach Anspruch 10, **dadurch gekennzeichnet, dass** sie ein Füller oder Grundierfüller ist.

12. Verfahren zur Herstellung einer gehärteten Beschichtung auf einem Substrat, bei dem eine Beschichtungszusammensetzung nach Anspruch 10 oder 11 auf das Substrat appliziert und anschließend gehärtet wird.

13. Verfahren zur Reparatur einer Mehrschichtlackierung, die Fehlstellen aufweist umfassend die Applikation einer Beschichtungszusammensetzung nach Anspruch 10 oder 11 im Bereich der Fehlstellen, Härtung der Zusammensetzung zur Herstellung einer gehärteten Beschichtungsschicht und anschließendes Schleifen der gehärteten Beschichtungsschicht.

14. Beschichtung, die nach einem Verfahren gemäße Anspruch 12 oder 13 hergestellt wurde.

## Claims

1. Aqueous resin dispersion (AD) comprising a resin component (R) comprising at least one di- and/or polyfunctional monomeric primary and/or secondary amine (M) and polyfunctional polymeric organic amines having primary and/or secondary amino groups,
where the resin component (R) has an NH equivalent of 150 to 400 g/mol and a proportion by weight of di- and/or polyfunctional monomeric organic amines (M) of 5% to 150 by weight,
where the polyfunctional polymeric organic amines having primary and secondary amino groups also comprise, in interreacted form,
(i) at least one di- and/or multifunctional organic epoxy compound, where the epoxy compounds have an average epoxy equivalent weight of less than 400 g/mol,
(ii) at least one monomeric amine (M), and
(iii) at least one compound X-R, where X is a functional group reactive toward epoxy groups and R is an organic radical containing polyoxyalkylene units and not containing any further X groups,
and where the amines (M) consist to an extent of at least 65 mol% of amines consisting of amino groups and hydrocarbon units.

2. Aqueous resin dispersion (AD) according to Claim 1, **characterized in that** the amines (M) are difunctional primary and/or secondary amines, preferably difunctional primary amines.

3. Aqueous resin dispersion (AD) according to Claim 1 or 2, **characterized in that** the resin component (R) has an N-H equivalent of 170 to 250 g/mol.

4. Aqueous resin dispersion (AD) according to Claims 1 to 3, **characterized in that** the X group in the compound (iii) is a primary amino group.

5. Aqueous resin dispersion (AD) according to Claims 1 to 4, **characterized in that** the compound (iii) is a primary polyoxyalkylenemonoamine.

6. Aqueous resin dispersion (AD) according to Claims 1 to 5, **characterized in that** the at least one di- and/or multifunctional organic epoxy compound of component (i) has an average epoxy equivalent weight of less than 250 g/mol.

7. Aqueous resin dispersion (AD) according to Claims 1 to 6, **characterized in that** the polymeric organic amines consist of components (i), (ii) and (iii).

8. Aqueous resin dispersion (AD) according to Claims 1 to 7, **characterized in that** the resin component (R) consists of the at least one di- and/or polyfunctional monomeric primary and/or secondary amine (M) and the polyfunctional polymeric organic amines having primary and/or secondary amino groups.

9. Aqueous resin dispersion (AD) according to Claims 1 to 8, **characterized in that** the amines (M) consist to an extent of at least 75 mol%, preferably to an extent of at least 90 mol%, more preferably to an extent of 100 mol%, of amines consisting of amino groups and hydrocarbon units.

10. Aqueous two-component coating composition comprising a paint base component (1) and a curing component (2), where
I) the paint base component (1) comprises at least one aqueous dispersion according to any of Claims 1 to 9 and the curing component (2) comprises at least one epoxy resin, where the epoxy resins have an average epoxy equivalent weight of less than 400 g/mol,
or
II) the paint base component (1) comprises at least one epoxy resin, where the epoxy resins have an average epoxy equivalent weight of less than 400 g/mol, and the curing component (2) comprises at least one aqueous dispersion according to any of Claims 1 to 9.

11. Coating composition according to Claim 10, **characterized in that** it is a surfacer or primer-surfacer.

12. Process for producing a cured coating on a substrate, in which a coating composition according to Claim 10 or 11 is applied to the substrate and then cured.

13. Process for repairing a multicoat paint system having defects, comprising the application of a coating composition according to Claim 10 or 11 in the region of the defects, curing the composition to produce a cured coating layer and then sanding the cured coating layer.

14. Coating that has been produced by a process according to Claim 12 or 13.

## Revendications

1. Dispersion aqueuse (wD) de résine contenant un composant résine (H) contenant au moins une amine (M) primaire et/ou secondaire monomère di- et/ou polyfonctionnelle ainsi que des amines organiques polymères polyfonctionnelles comportant des groupes amino primaires et/ou secondaires
dans laquelle le composant résine (H) présente un équivalent de NH de 150 à 400 g/mole et une proportion en poids d'amines (M) organiques monomères di- et/ou polyfonctionnelles de 5 à 15 % en poids,
dans laquelle en outre les amines organiques polymères polyfonctionnelles comportant des groupes amino primaires et secondaires contiennent, sous forme ayant réagi les un(e)s avec les autres,
(i) au moins un composé époxyde organique di- et/ou multifonctionnel, les composés époxyde comportant en moyenne un poids d'équivalent époxyde inférieur à 400 g/mole,
(ii) au moins une amine (M) monomère, et
(iii) au moins un composé X-R, X étant un groupe fonctionnel réactif vis-à-vis de groupes époxyde et R étant un radical organique contenant des unités polyoxyalkylène, qui ne contient pas d'autres groupes X,
et dans laquelle les amines (M) consistent à raison d'au moins 65 % en moles en amines qui sont constituées de groupes amino et d'unités hydrocarbonées.

2. Dispersion aqueuse (wD) de résine selon la revendication 1, **caractérisée en ce que** les amines (M) sont des amines primaires et/ou secondaires difonctionnelles, de préférence des amines primaires difonctionnelles.

3. Dispersion aqueuse (wD) de résine selon la revendication 1 ou 2, **caractérisée en ce que** le composant résine (H) présente un équivalent de N-H de 170 à 250 g/mole.

4. Dispersion aqueuse (wD) de résine selon la revendication 1 à la revendication 3, **caractérisée en ce que** le groupe X du composé (iii) est un groupe amino primaire.

5. Dispersion aqueuse (wD) de résine selon la revendication 1 à la revendication 4, **caractérisée en ce que** le composé (iii) est une polyoxyalkylènemonoamine.

6. Dispersion aqueuse (wD) de résine selon la revendication 1 à la revendication 5, **caractérisée en ce que** ledit au moins un composé époxyde organique di- et/ou multifonctionnel du composant (i) présente en moyenne un poids d'équivalent époxyde inférieur à 250 g/mole.

7. Dispersion aqueuse (wD) de résine selon la revendication 1 à la revendication 6, **caractérisée en ce que** les amines organiques polymères sont constituées des composants (i), (ii) et (iii).

8. Dispersion aqueuse (wD) de résine selon la revendication 1 à la revendication 7, **caractérisée en ce que** le composant résine (H) est constitué de l'au moins une amine (M) primaire et/ou secondaire monomère diet/ou polyfonctionnelle ainsi que des amines organiques polymères polyfonctionnelles comportant des groupes amino primaires et/ou secondaires.

9. Dispersion aqueuse (wD) de résine selon la revendication 1 à la revendication 8, **caractérisée en ce que** les amines (M) consistent à raison d'au moins 75 % en moles, de préférence à raison d'au moins 90 % en moles, de façon particulièrement préférée à raison de 100 % en moles en amines qui sont constituées de groupes amino et d'unités hydrocarbonées.

10. Composition aqueuse de revêtement à deux composants, contenant un composant peinture de base (1) et un composant durcisseur (2), dans laquelle
I) le composant peinture de base (1) contient au moins une dispersion aqueuse selon l'une quelconque des revendications 1 à 9 et le composant durcisseur (2) contient au moins une résine époxydique, les résines époxydiques présentant en moyenne un poids d'équivalent époxyde inférieur à 400 g/mole,
ou
II) le composant peinture de base (1) contient au moins une résine époxydique, les résines époxydiques présentant en moyenne un poids d'équivalent époxyde inférieur à 400 g/mole, et le composant durcisseur (2) contient au moins une dispersion aqueuse selon l'une quelconque des revendications 1 à 9.

11. Composition de revêtement selon la revendication 10, **caractérisée en ce qu'**elle est un apprêt de granissage ou apprêt de fond.

12. Procédé pour la production d'un revêtement durci sur un subjectile, dans lequel une composition de revêtement selon la revendication 10 ou 11 est appliquée sur le subjectile et ensuite durcie.

13. Procédé pour la réparation d'un revêtement de peinture multicouche qui présente des manques, comprenant l'application d'une composition de revêtement selon la revendication 10 ou 11 dans la zone des manques, le durcissement de la composition pour la production d'une couche de revêtement durcie et le ponçage subséquent de la couche de revêtement durcie.

14. Revêtement, qui a été produit conformément à un procédé selon la revendication 12 ou 13.
